# EUROPEAN PATENT SPECIFICATION

(11) **EP 3 861 037 B1**
(45) Date of publication and mention of the grant of the patent: **19.10.2022**
(21) Application number: 19779615.4
(22) Date of filing: 01.10.2019
(51) Int. Cl.: C08F 222/40, B33Y 70/00, B29C 64/124

(54) **RESIN COMPOSITION**
HARZZUSAMMENSETZUNG
COMPOSITION DE RÉSINE

(30) Priority: 01.10.2018 EP 18000783
(43) Date of publication of application: 11.08.2021
(73) Proprietor: Cubicure GmbH, 1230 Wien (AT)
(72) Inventor: FRANK, Christian, 1230 Wien (AT); GORSCHE, Christian, 1140 Wien (AT); GMEINER, Robert, 1050 Wien (AT)
(74) Representative: Keschmann, Marc
(86) International application number: PCT/IB2019/058336
(87) International publication number: WO 2020/070639

(56) References cited:
- WO-A2-00/20517
- US-A1- 2016 369 040

## Description

The invention relates to a resin composition for three dimensional printing at elevated temperatures forming high temperature-resistant materials and the use thereof as well as an item produced from the inventive resin composition.

Lithography-based additive manufacturing technologies (L-AMTs) such as stereolithography have manifested their position for the production of prototypes with often complex geometries (rapid prototyping). Recent technical advancements are trying to push these L-AMTs more toward the actual production of functional parts. Examples, where such an industrial venture has been successful are the fields of hearing aid shells or transparent orthodontic fixations. Nevertheless, one crucial drawback of most of the established light-curable materials is a heat resistance below 100°C, which excludes other potential applications, especially in an industrial environment, where heat resistance is often a vital requirement.

Light-curable materials (resins or formulations) for L-AMTs are typically based on reactive components (generally on monomers and photoinitiators) that polymerize and cure upon light irradiation and certain additives that further adjust the overall material performance. Typically, the photoinitiator is activated via light irradiation and generates a reactive site (e.g. a radical) that can then react with the respective monomers (e.g. (meth)acrylates, (meth)acrylamides, vinyl ester, styrene compounds, maleimides, etc.).

Processing of such light-curable formulations can be performed via various L-AMTs such as stereolithography, digital light processing, digital inkjet printing or multijet modeling. All mentioned technologies are based on a layer-by-layer build-up of the final 3D-part. More recently, the company Carbon has developed the continuous liquid interface production "CLIP", which represents an advanced L-AMT and further pushes the field towards fast production. Current formulations applied for such technologies are of low viscosity (< 1 Pa*s), which is imperative for a successful build-up job or build-up step (see I. Gibson, D.W. Rosen, B. Stucker et al., "Additive Manufacturing Technologies", Vol. 238, Springer Verlag (2010)).

Applicant has developed the so-called Hot Lithography Process (EP 3 284 583 A1), which allows for lithography-based 3D-stucturing at elevated temperatures of light-curable resins having high viscosities of > 15 Pa*s at room temperature (20°C). In the context of EP 3 284 583 A1, high viscosities are to be found when processing materials are having high contents of monomers, oligomers and/or prepolymers with high molecular weight (> 2000 g mol⁻¹) and/or high melting or softening temperatures and/or strong intermolecular forces and/or high contents of filling materials that are added to the viscous light-curable resin in order to tune final material performance. The combination of high temperatures and processing of highly viscous formulations enables the 3D-structuring of light-curable materials with combined toughness, heat resistance and impact resistance.

Resin compositions for lithography-based 3D-structuring to form plastic materials that exhibit a heat resistance of up to 300°C and above had yet to be developed. Recently, cyanate ester-based dual cure resins have been introduced as a class of high-temperature thermosets for additive manufacturing (WO 2017/040883 A1). In order to maintain reactivity toward light, formulations with a substantial content of light-curable components need to be formulated and yield materials with glass transition temperatures (T_{g}) of up to 250°C and a heat deflection temperature T_{HDT(B)} of under 240°C. Pure cyanate ester resins are known to exhibit very high glass transition temperatures (up to 400°C), which have so far not been available for processing by L-AMTs due to the necessity for a substantial portion of a light-curable component within the formulation.

The company Novoset has disclosed dual cure resins with a component being a radically curable component (e.g. curable via UV-light, cationic, electron beam, laser, peroxide and/or chemical additive curing) and another component being a thermoset (US 9,708,440 B2). The examples described in this patent have been limited to cyanate ester-based formulations and reported glass transition temperatures of up to 300°C. Such dual cure resins are described in US 2017/0173866 A1 as potential tools for injection moulding, injection moulding cores, engine blades, aerospace applications such as spacecraft or heat shield parts, boat and naval applications, impellers, radomes, satellite structures, automotive parts (e.g. housings and interior facings), printed circuit boards, packaging and cooling architecture for electronics, chip mounting, robotic hands, battery storage enclosures, healthcare applications (e.g. parts exposed to high temperature for sterilisation), surgical instruments (e.g. retractors, dilators, dissectors), intraoral devices such as surgical guides for dental applications or other examples where there is a demand for mechanical stability at high temperatures above 150°C.

Maleimide-based resins (e.g. bismaleimide resins, so-called BMIs) have been established in the industrial fields of aerospace, adhesives, packaging and microelectronics for their high performance (e.g. high heat resistance, chemical and flame resistance, high mechanical stability, low moisture absorption, low thermal expansion coefficient), but their poor processability has limited BMIs for more extensive industrial exploitation and in particular their use in L-AMTs is severely limited. The materials are usually solids or semi-solids with high melting temperatures (>50°C) and are thus rendered incompatible with traditional L-AMTs. Moreover, BMI-thermosets exhibit brittleness due to high crosslink density and usually high crystalline contents.

WO 00/20517 A2 and US 2016/369040 A1 disclose maleimide-based curable compositions that can be used in stereolithographic or rapid prototyping.

Limited examples of maleimide-based components have been introduced to light-curable formulations (e.g. US2013/0025495 A1), as they tend to increase resin viscosity and often render the final formulation non-processable, especially in application fields such as coatings, printing inks and L-AMTs, where high viscosities are problematic.

It is thus the object of the present invention to provide a resin composition that is adapted to be used in L-AMTs and in particular in stereolithography, which allows for 3D-printing of products of remarkably high temperature resistance and at the same time high mechanical strengths. In order to solve this object, a high temperature-resistant resin composition for three-dimensional printing at elevated temperatures is provided comprising:
a) a heat curable component A having one or more chemical species chosen from the group comprised of monomers and/or oligomers and/or prepolymers of maleimide derivatives according to formula (I) 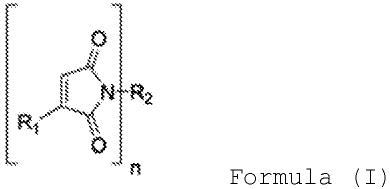 as well as isomers thereof, in particular itaconimide, wherein - n is an integer between 1 and 10
   - R1 represents H, CH3 or CH2,
   - R2 independently represents a linear, branched or cyclic C5-C40 aliphatic or aromatic residue of one or more of the group consisting of phenyl, benzyl, phenethyl, methyl, ethyl, propyl, butyl, pentyl, hexyl, octyl, decanyl, dodecanyl, acetic, propanoic, butanoic, pentanoic, undecanoic, dodecanoic, benzoic acid and corresponding esters, alkyl or aromatic esters, cyclopropyl, cyclobutyl, cyclopentyl, cyclohexyl, cycloheptyl, cyclooctyl, adamantyl, isobornyl, propenyl, biphenyl, naphthyl, anthracenyl, pyrenyl, bis(methylene)oxy, bis(ethylene)oxy, bis(phenyl)methane, bis(phenyl)ethane, bis(phenyl)propane, bis(phenyl)butane, bis(phenyl)ether, bis(phenyl)thioether, bis(phenyl)amino and bis(phenyl)sulfone, which are optionally substituted with one or more C1-C6 alkyl, C1-C6 alkoxy, C1-C6 thioether, halogen, -NO2, -SO3H, -CF3, -OH, -NH2, -SH, - CN, -isocyanato, -trimethoxysilyl, -triethoxysilyl or a polymerisable group from the substance classes of maleimide and citraconimide compounds and/or isomers thereof, in particular itaconimide.
      and
b) a light-curable component B having one or more chemical species chosen from the group comprised of (meth)acrylate, (meth)acrylamide, vinyl esters, vinyl ether, vinyl, allyl, alkinyl or styrenic compounds as well as derivatives thereof substituted with at least one molecule from the group from which component A is chosen, wherein the amount of component A ranges from 30 wt% to 95 wt% based on the total weight of components A and B and the amount of the light curable component B ranges from 5 to 70 wt%, based on the total weight of components A and B characterized in that component A comprises a species of component A with n being an integer from 2 to 10 having an aromatic residue linked to the N-atom of the maleimide ring of Formula I, preferably via a methylene group, in an amount ranging from 20 wt% to 100 wt%, preferably from 30 wt% to 100 wt% and more preferably from 40 wt% to 100 wt%, based on the total weight of component A comprised in the resin composition.

Resin compositions of the inventive type can be processed in 3D-printing applications at elevated temperatures, which means temperatures significantly above room temperature (20°C), in which the inventive resin composition is heated and subsequently subjected to a layer-by-layer, light-induced build-up step, in which the light-curable component B of the inventive resin composition is structured by light-curing to obtain three dimensional objects via a lithography-based additive manufacturing method yielding materials with the aforementioned desirable thermal, mechanical and chemical properties of high temperature resistant thermosetting compounds.

The content of light-curable component B is preferably kept to a minimum (even as low as 5 wt% based on the total weight of components A and B) in order to maintain the desirable (thermo)mechanical properties of the heat-cured component A. Hot Lithography is used as a processing method to enable the 3D-structuring of resins with a high content of component A, being thermoset precursors like maleimide- or citraconimide-based or based on isomers, oligomers or prepolymers thereof, which are usually characterized by high melting temperatures (> 50°C) and for conventional L-AMTs comparably high viscosities of the resin formulation (> 15 Pa*s at room temperature and 0.01-40 Pa*s, preferably from 0.1-25 Pa*s at processing temperature). The resulting materials offer unique thermal resistance (meaning the retention of an acceptable proportion of the initial properties at ambient conditions during continuous exposure to elevated temperatures even up to 300°C and more). This is substantiated by the herein disclosed (thermo)mechanical properties for 3D-parts produced via L-AMTs (glass transition temperature T_{g} and heat deflection temperature T_{HDT(B)} of up to 300°C and even above) .

By way of example, heat-curable monomers of component A of the inventive resin composition are represented by the following chemical formulae:

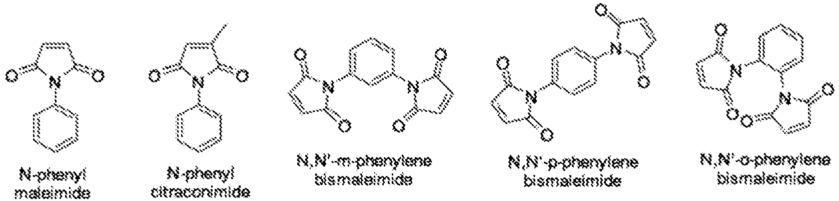

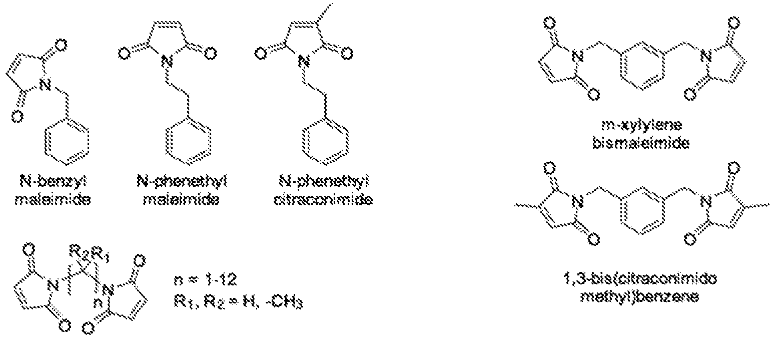

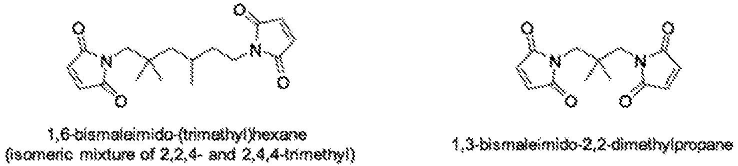

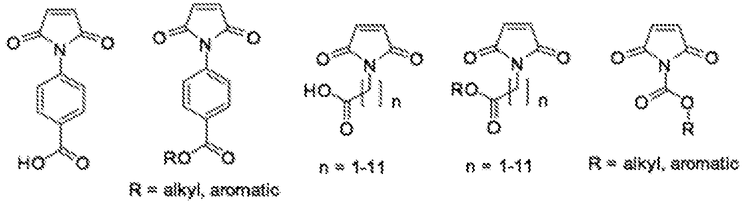

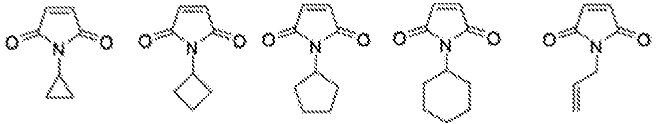

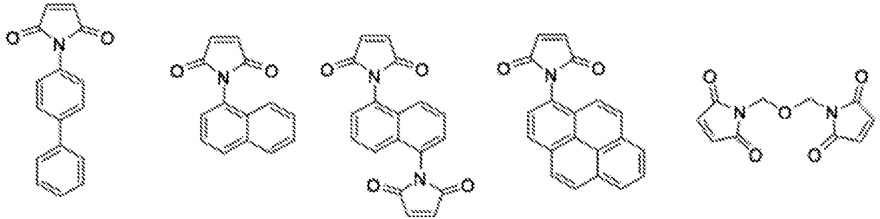

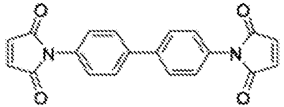

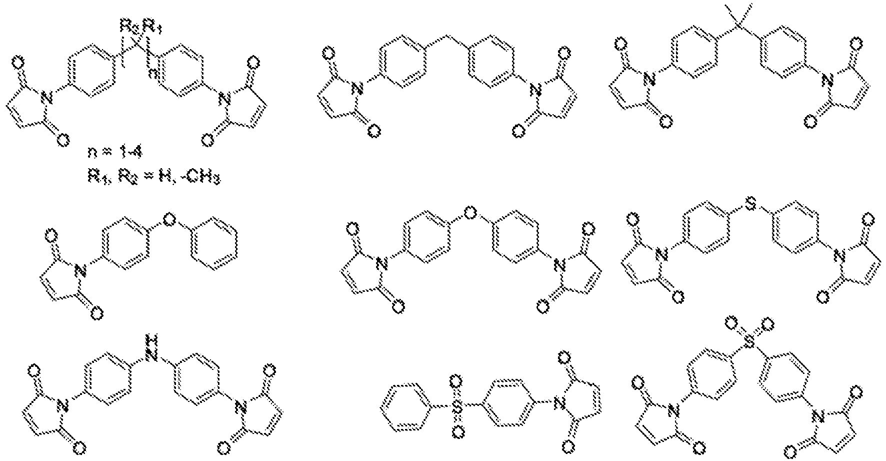

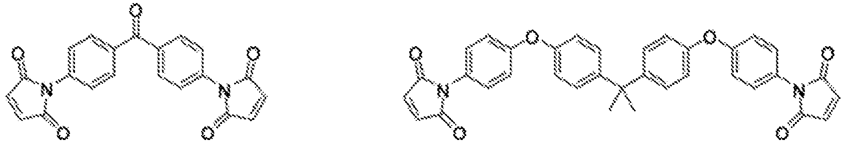

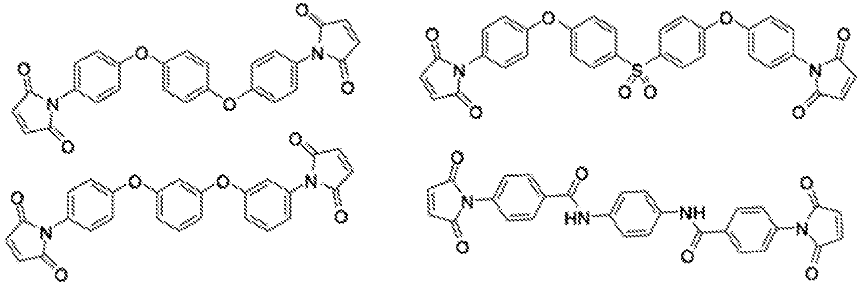

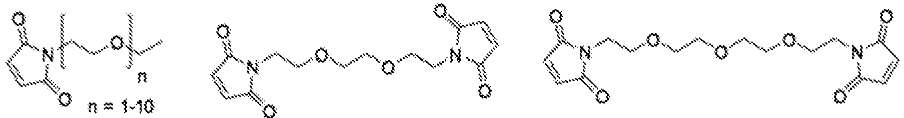

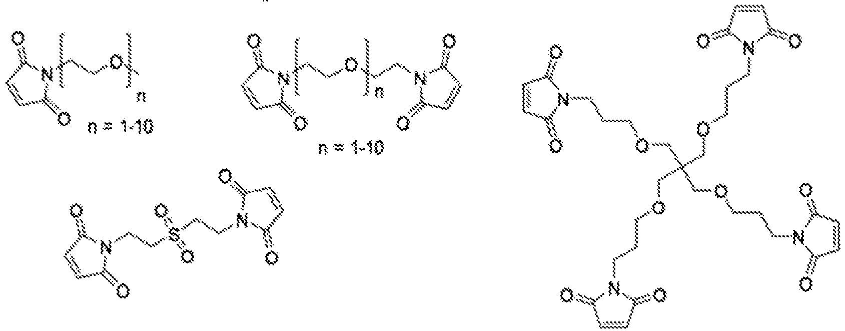

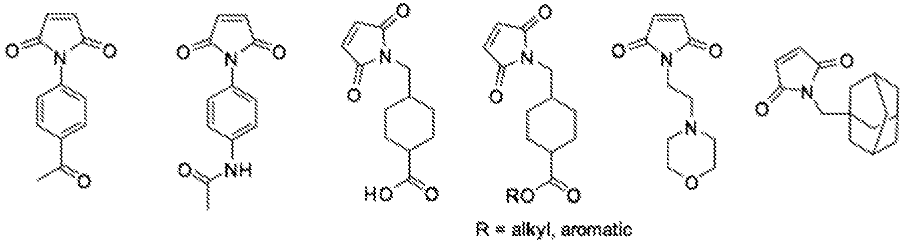

Preferably, the amount of component A ranges from 40 wt% to 95 wt%, preferably from 50 wt% to 95 wt%, more preferably from 60 wt% to 95 wt% and even more preferably from 70 wt% to 95 wt%, based on the total weight of components A and B and the amount of the light-curable component B ranges preferably from 5 wt% to 60 wt%, preferably from 5 wt% to 50 wt%, more preferably from 5 wt% to 40 wt% and even more preferably from 5 wt% to 30 wt%, based on the total weight of components A and B.

Multifunctional species of component A in which R2 represents aromatic residues bring about higher heat resistance due to high crosslinking, but increase melting temperature or viscosity of the resin and reduce light curability. The increase in viscosity and limited light curability can be countered, when the aromatic residue is linked to the N-atom of the maleimide ring of Formula I by a short alkyl chain (e.g. a methylene group). The increase in melting temperature or viscosity can be reduced, when the aromatic residue is linked to the N-atom of the maleimide ring of Formula I by a short alkyl chain. Component A comprises a species of component A with n being an integer from 2 to 10 having an aromatic residue linked to the N-atom of the maleimide ring of Formula I, preferably via a methylene group, in an amount ranging from 20 wt% to 100 wt%, preferably from 30 wt% to 100 wt% and more preferably from 40 wt% to 100 wt%, based on the total weight of component A comprised in the resin composition. Such preferred species of component A are in particular species as represented by the following formulae:

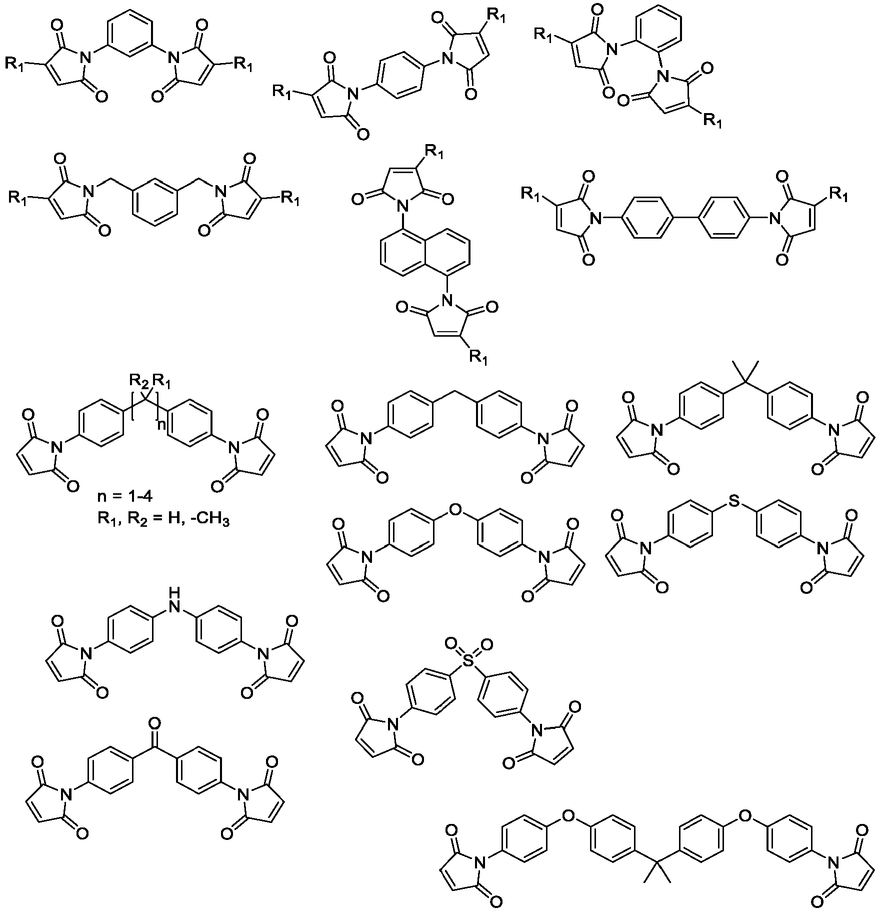

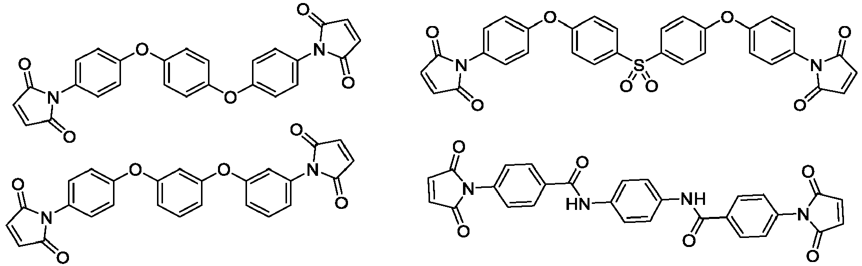

Preferably, component A further comprises a species of component A with n being an integer from 2 to 10, in which R2 is an aliphatic residue in an amount ranging from 0.5 wt% to 50 wt%, preferably from 3 wt% to 30 wt% and more preferably from 5 wt% to 15 wt%, based on the total weight of component A comprised in the resin composition. These species of component A bring about lower melting temperatures or viscosities of the uncured resin composition and additional light curability, which enhances processability. However, such derivatives also lower temperature resistance of the final thermally cured material and are therefore to be limited to the above content. Such preferred species of component A are in particular species as represented by the following formulae:

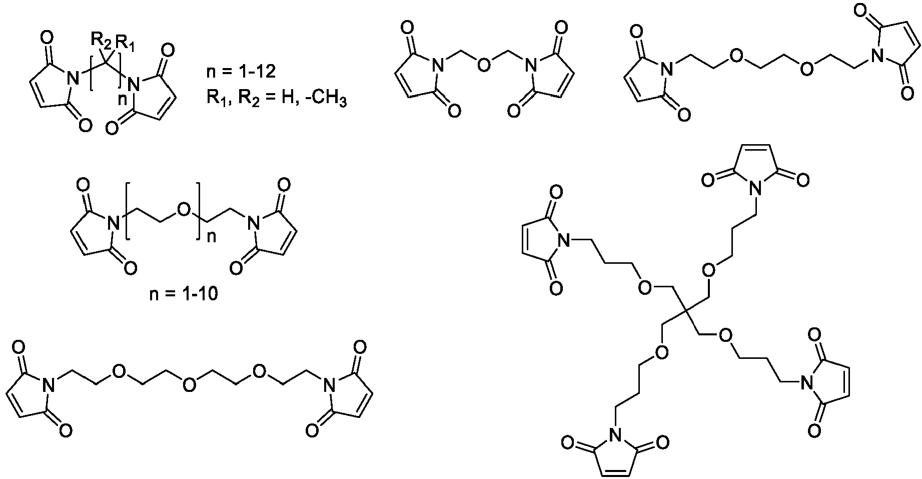

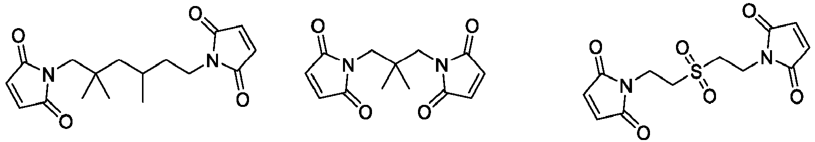

Furthermore, monofunctional species of component A bring about better workability of the resin composition, i.e. lower viscosity or melting temperatures but also lower temperature resistance of the resin when cured due to lower crosslink density of the final material. Therefore, component A preferably comprises a species of component A with n being 1, in which R2 independently represents a linear, branched or cyclic C5-C40 aliphatic or aromatic residue of one or more of the group consisting of phenyl, benzyl, phenethyl, methyl, ethyl, propyl, butyl, pentyl, hexyl, octyl, decanyl, do-decanyl, acetic, propanoic, butanoic, pentanoic, undecanoic, dodecanoic, benzoic acid and corresponding esters, alkyl or aromatic esters, cyclopropyl, cyclobutyl, cyclopentyl, cyclohexyl, cycloheptyl, cyclooctyl, adamantyl, isobornyl, propenyl, biphenyl, naphthyl, anthracenyl, pyrenyl, (methylene)oxy, (ethylene)oxy, which are optionally substituted with one or more C1-C6 alkyl, C1-C6 alkoxy, C1-C6 thioether, halogen, - NO2, -SO3H, -CF3, -OH, -NH2, -SH, -CN, -isocyanato, - trimethoxysilyl or -triethoxysilyl, in an amount ranging from 0.5 wt% to 30 wt%, preferably from 1 wt% to 20 wt% and more preferably from 5 wt% to 20 wt%, based on the total weight of component A comprised in the resin composition. Such preferred species of component A are in particular species as represented by the following formulae:

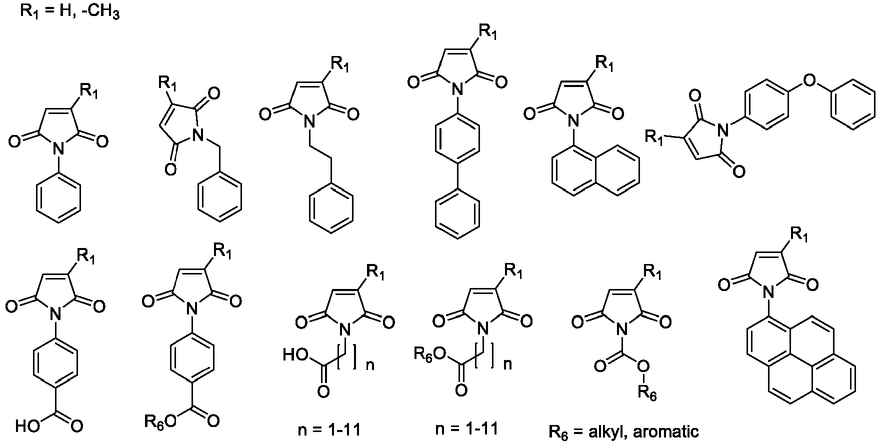

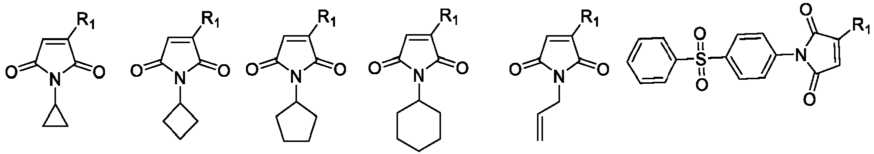

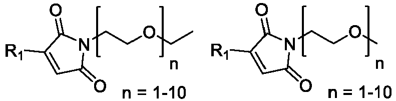

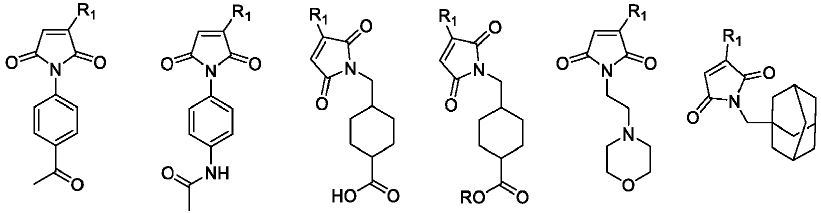

Some otherwise preferred compounds of component A of the inventive resin composition are N-phenylmaleimide, 2,6-xylylmaleimide, N,N'-m-phenylenebismaleimide, N,N'-(4-methyl-m-phenylene)-bismaleimide, 4,4'-diphenylmethanebismaleimide, m-xylylenebismaleimide, 1,3-bis(citraconimidomethyl)benzene, 1,6-bismaleimido-(trimethyl)hexane (isomeric mixture of 2,2,4- and 2,4,4-trimethyl) and/or oligomers and/or prepolymers thereof as represented by the following chemical formulae:

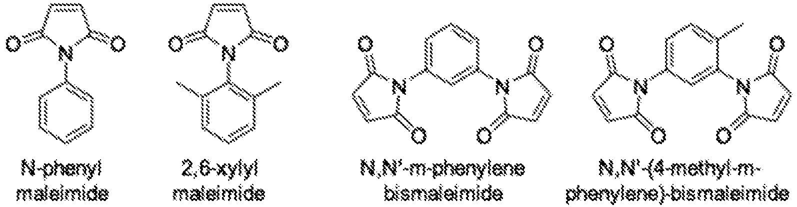

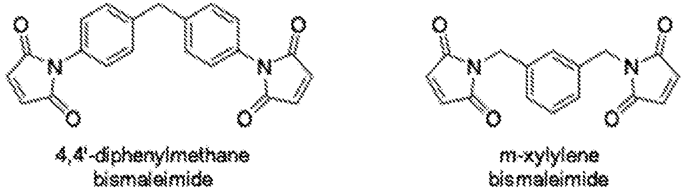

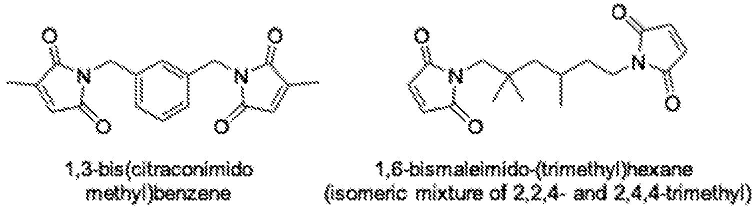

In some preferred embodiments, the inventive resin composition comprises toughness modifiers selected from the group consisting of thermoplastic resins, in particular polyethylene oxide and polypropylene oxide, reactive rubbers, in particular maleimido-terminated butadiene-acrylonitrile copolymer and/or monomers comprising reactive maleimide- or citraconimide groups with flexible linkers, in particular long aliphatic chains and/or ethylene glycol spacers, monomers such as Q-Bond (a bismaleimide 36 carbon cycloaliphatic branched structure) and/or MIA (an oligomeric polyether bismaleimide, poly(oxybutylene)-di(2-maleimidoacetate), oligomers and/or prepolymers thereof.

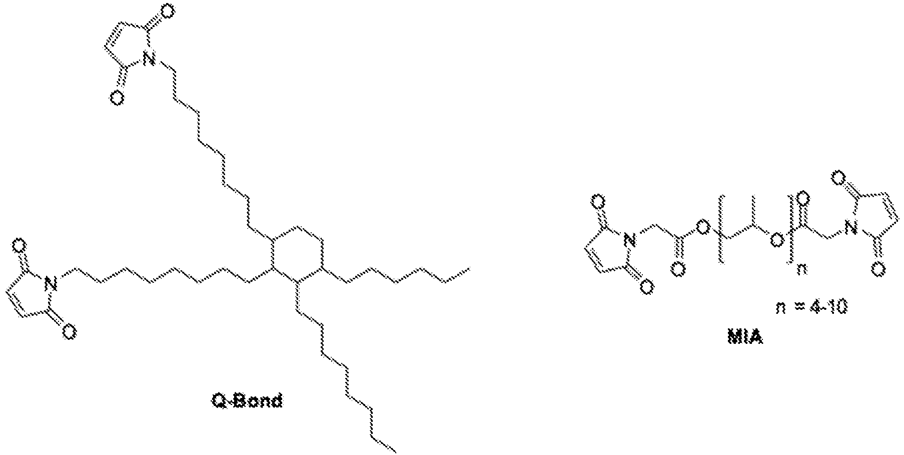

Preferably, the resin composition is devised in such a manner, that the component B comprises a multifunctional (meth)acrylate and/or a mixture of mono- and multifunctional (meth)acrylates, in particular methyl-, ethyl-, 2-hydroxyethyl, butyl-, benzyl-, tetrahydrofurfuryl- or isobornyl(meth)acrylat, 1,4-butanedioldi(meth)acrylate, 1,6-hexanedioldi(meth)acrylate, 1,10-decanedioldi(meth)acrylat or 1,12-dodecanedioldi-(meth)acrylate, 2-(2-biphenyloxy)-ethyl(meth)acrylate, bisphenol-A-di(meth)acrylate (an addition product from (meth)acrylic acid and bisphenol-A-diglycidylether), ethoxy- or propoxylated bisphenol-A-di(meth)acrylate (e.g. 2-[4-(2-(meth)acryloyloxyethoxyethoxy)phenyl]-2-[4-(2-(meth)acryloyloxyethoxy)phenyl]-propane) or 2,2-bis[4-(2-(meth)acryloxypropoxy)phenyl]propane, 1,6-bis-[2-(meth)-acryloyloxyethoxycarbonylamino]-2,2,4-trimethylhexane (an addition product from 2-hydroxyethyl(meth)acrylate and 2,2,4-(2,4,4)-trimethylhexamethylen-diisocyanate), pentaerythrittetra(meth)acrylate, tricyclodecanedimethanol di(meth)acrylate, di-, tri- or tetraethylenglycol-di(meth)acrylate and/or trimethylolpropantri(meth)acrylate. Monofunctional (meth)acrylates are components with one radically polymerisable group. Multifunctional (meth)acrylate components are components with two or more radically polymerisable groups. In more preferred embodiments the formulations related to this invention are composed of at least one di- and/or multifunctional (meth)acrylate or a mixture of mono- and/or di- and/or multifunctional (meth)acrylates. These are radically polymerisable monomers and hence monomers polymerisable by light and are therefore specifically preferred as the light-curable component matrix for component B of the inventive resin composition. Preferred multifunctional monomers of component B are chosen from the group comprised of aromatic or cycloaliphatic groups for reasons of low tendency toward polymerization shrinkage and high heat resistance of the cured resin. Such multifunctional monomers of component B are preferably 2-(2-biphenyloxy)-ethyl(meth)acrylate, bisphenol-A-di(meth)acrylate (an addition product from (meth)acrylic acid and bisphenol-A-diglycidylether), ethoxy- or propoxylated bisphenol-A-di(meth)acrylate (e.g. 2-[4-(2-(meth)acryloyloxyethoxyethoxy)phenyl]-2-[4-(2-(meth)acryloyloxyethoxy)phenyl]-propane) or 2,2-bis[4-(2-(meth)acryloxypropoxy)phenyl]propane, tricyclodecanedimethanol di(meth)acrylate or tris[2-((meth)acryloyloxy)ethyl] isocyanurate. Multifunctional monomers are preferably tri-, tetra-, penta- and/or hexafunctional (meth)acrylates and/or hyperbranched and/or dendritic (meth)acrylates having even more functional sites. These are suitable for reasons of fast reaction rates and high crosslinking densities.

Under these competing aspects of high heat resistance of the cured resin at low melting temperatures or viscosities of the uncured resin and good light curability for enhanced processability, preferred embodiments of the inventive resin composition comprise the following examples:

| | Exp 1 | Exp 2 | Exp 3 |
|---|---|---|---|
| Component B | Multifunctional methacrylate (30 wt%) | Multifunctional methacrylate (30 wt%) | Multifunctional methacrylate (30 wt%) |
| Component A, species 1 | aromatic BMI (70 wt%) | aromatic BMI (69.65-35 wt%) | aromatic BMI (69.30-14 wt%) |
| | 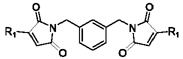 | 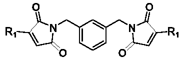 | 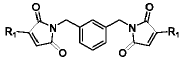 |
| Component A, species 2 | | aliphatic BMI (0.35 -35 wt%) | aliphatic BMI (0.35 -35 wt%) |
| | | 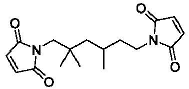 | 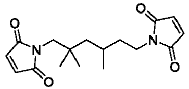 |
| Component A, species 3 | | | Monofunctional maleimide (0.35 - 21 wt%) |
| | | | 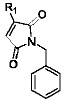 |

According to a preferred embodiment of the present invention, the inventive resin composition comprises at least one photoinitiator suitable for radical polymerisation upon light excitation, preferably light excitation within the wavelength spectrum of 150 nm to 580 nm, more preferably between 300 nm to 500 nm, preferably in amounts of 0.01 wt% to 10 wt%, preferably 0.1 wt% to 7 wt%, more preferably 0.2 wt% to 5 wt% based on the weight of components A and B. This means the photoinitiators can be activated with light and initiate polymerisation of the polymerisable components of the formulation.

The light-initiated polymerisation (photopolymerisation) is successful, when the applied light exposure is of a suitable wavelength for activating the photoinitiator and is of sufficient power. Aside from the light exposure being adequate for the photoinitiator, the overall formulation (optionally including light absorbing monomers or additives) may not interfere with the interaction of the emitted light and the photoinitiator. Light exposure applied herein includes any wavelength and power being able to initiate polymerisation. Preferred wavelengths of light are 150 nm to 580 nm, even more preferred between 300 nm to 500 nm. Any suitable UV or visible light source may be used, including but not limited to lasers or LED sources. The light source may emit a broadband or narrowband light spectrum, or a combination thereof. The light source may emit continuous or pulsed light during single or repeated exposure periods, which may additionally be varied via time or intensity of exposure. A suitable and elevated process temperature will increase the reactivity of the system and thus enhance the light-induced structuring process. Adjusting the parameters and variables above will lead to an optimized protocol for carrying out the described photopolymerisation reaction, yielding optimal 3D-processing via L-AMTs.

Preferred photoinitiators are Norrish type I photoinitiators alone or in combination with each other. Some preferred examples are 2-hydroxy-2-methylpropiophenone, 1-hydroxycyclohexyl phenyl ketone, methyl phenyl glyoxylates, 2-benzyl-2-(dimethylamino)-4'-morpholinobutyrophenone, [1-(4-phenylsulfanylbenzoyl)heptylideneamino]benzoate, [1-[9-ethyl-6-(2-methylbenzoyl)carbazol-3-yl]ethylideneamino] acetate, bis (cyclopentadienyl) bis [2,6-difluoro-3-(1-pyrryl) phenyl] titanium, acyl- or bisacyl-phosphine oxide-based initiators, in particular 2,4,6-trimethylbenzoyldiphenylphosphine oxide (TPO), ethyl-(2,4,6-trimethylbenzoyl)phenyl phosphinate (TPO-L), phenylbis(2,4,6-trimethylbenzoyl)phosphine oxide (BAPO), ethyl (3-benzoyl-2,4,6-trimethylbenzoyl)phenyl phosphinate, acyl-, bisacyl- or tetraacylgermanes, in particular bis(4-methoxybenzoyl)diethylgermane (BMDG), acyl-, bisacyl- or tetraacylsilanes, acyl-, bisacyl- or tetraacylstannanes.

Preferred photoinitiators may also be Norrish type II photoinitiators. Some preferred examples are benzophenones (in particular benzophenone, 4-methyl benzophenone, 4,4'-bis(diethylamino)benzophenone), benzoin, diketones (e.g. 9,10-phenanthrenequinone, 1-phenyl-propane-1,2-dione, diacetyl or 4,4'-dichlorobenzil and/or derivatives thereof), thioxanthones (in particular 2,4-diethyl-9H-thioxanthen-9-one). Such type II photoinitiators may be used in combination with coinitiators such as tertiary amines, in particular aromatic tertiary amines such as N,N-dialkylaniline, -p-toluidine or -3,5-xylidine, p-N,N-dialkylamino-phenylethanol, -benzoic acid derivatives, -benzaldehyde or triethanolamine.

In further preferred embodiments, a combination of said type I and/or type II photoinitiators may be used.

In further preferred embodiments the inventive resin composition comprises one and/or more initiators for radical polymerisation, in particular thermal initiators, which are suitable for thermal curing. Some preferred examples are azo compounds, more preferably 2,2'azobis(isobutyronitrile) (AIBN) and/or azobis-(4-cyanovaleric acid) and/or peroxides (e.g. dibenzoyl peroxide, dilauroyl peroxide, dicumyl peroxide, tert-butylperbenzoate, di-(tert-butyl)-peroxide) and/or 1,1,2,2-tetraphenyl-1,2-ethanediol.

In some preferred embodiments, the inventive resin composition comprises at least one polymerisation inhibitor, preferably an inhibitor selected from the group consisting of hydroquinones, benzoquinones and/or phenothiazines.

The aforementioned photoinitiators, thermal initiators, inhibitors and other additives may be additionally functionalized with a polymerisable functional group, which can either undergo copolymerisation with components A or components B as it is in accordance with a preferred embodiment of the present invention.

In some preferred embodiments, component A further comprises a comonomer and/or cooligomer and/or coprepolymer, which is able to copolymerize with component A as well as with derivatives thereof. Such comonomers can preferably be selected from the group comprised of monomers and/or oligomers and/or prepolymers from alkenylphenol, alkenylphenyl ether, alkenylphenol ether, polyamine, aminophenol, amino acid hydrazine, cyanate ester, diallyl phthalate, triallyl isocyanurate, triallyl cyanurate, vinylic and/or styrenic functional groups. Some preferred examples of such comonomers and the like are represented by the following chemical formulae:

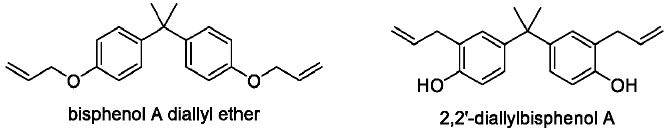

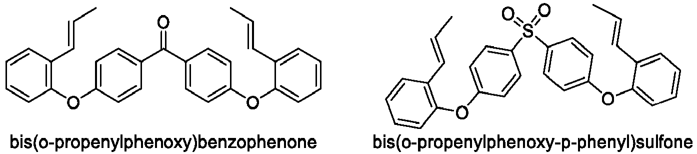

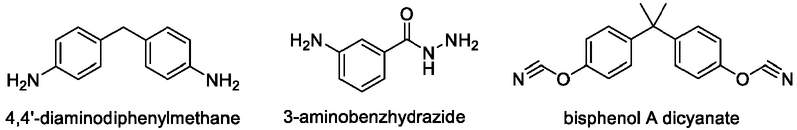

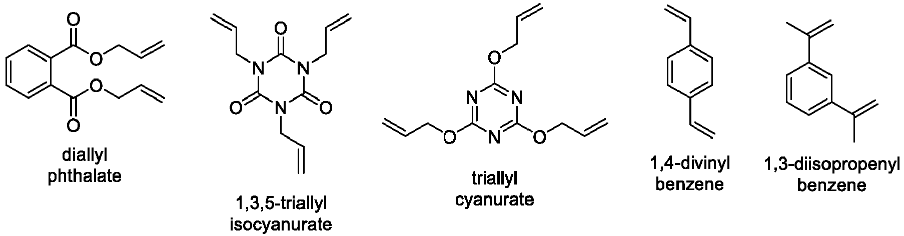

In some preferred embodiments, at least one catalyst may be used for the thermal curing of component A. Suitable catalysts may preferably be selected from the group consisting of tertiary amines, in particular DABCO and triethylamine, phosphines, triphenyl phosphonate, imidazoles, in particular 2-methyl-1-vinyl imidazole, organic acids, and/or peroxides.

In some preferred embodiments, the resin composition of this invention comprises organic and/or inorganic fillers. Such mixtures are generally described as composites. Preferred organic fillers may be but are not limited to core-shell particles, block copolymers, PTFE, high performance polymers, thermoplastics, in particular poly(ether imides) or polysulfones, rubbers, and the like.

Preferred inorganic fillers may be metals, metal oxides and/or ceramics (e.g., SiO₂, ZrO₂, TiO₂, ZnO or mixtures thereof with an average particle size of 1-20 µm, or preferred nano- or micro fillers with an average particle size of 10 nm -1000 nm), silicates such as talc, clays, silica and/or mica, glass powders (in particular quartz, glass ceramics as preferred nano- or micro fillers with an average particle size of 0.01-20 µm), carbon black, graphene, graphite. The average particle size of the fillers may be determined via static light scattering methods using the Mie-theory according to DIN/ISO 13320 for the determination of average particle size and particle size distribution. In a second aspect, such organic or inorganic fillers may be fibers (e.g. nanofibers, whiskers, and/or mixtures thereof), spheres, fractures and/or defined three-dimensional (in particular graphite) and/or two-dimensional structures (in particular monolayers of graphene).

Preferably, the filler(s) may be modified on their surface (e.g. silanzied via radically polymerisable silanes such as 3-methacryloyloxypropyl trimethoxy silane). For the surface modification of inorganic fillers, such as ZrO2 or TiO2, functionalized, acidic phosphates (e.g. 10-methacryloyloxydecyldihydrogen phosphate) may be used. With such modifications, phenomena like agglomeration, mixture stability, particle bonding to the polymer matrix are controlled and/or influenced.

The resin composition of this invention may additionally comprise stabilizers, colorants, antibacterial agents, optical brighteners, softeners and/or UV-absorbers.

The herein disclosed mixtures of components A according to the general formula I, may be mixed in various ratios with components B and additional components as described above. Preferable ratios for mixing the formulations may be:
- At least one component A according to formula I (thermally curable components): 30-95 wt%, based on the weight of components A and B
- At least one component B (light curable components, preferably (meth)acrylate-based): 5-70 wt%, based on the weight of components A and B
- At least one photoinitiator: 0.01-10 wt%, preferably 0.1-7 wt%, more preferably 0.2-5 wt%, based on the weight of components A and B
- A suitable comonomer, cooligomer and/or coprepolymer, which copolymerizes with component A: 1-70 wt%, preferably 5-50 wt%, even more preferably 5-40 wt% based on the total weight of component A and the comonomer, cooligomer and/or coprepolymer
- A suitable catalyst for component A: 0.01-10 wt%, preferably 0.1-5 wt%, based on the weight of components A and B.

The presence of the mono- or oligomeric, mono- or multifunctional component A provides for a relatively high heat resistance (heat deflection temperature T_{HDT (B)} > 250°C and glass transition temperature T_{g} > 250°C) of the polymerisates. Second, the presence of the mono- and/or oligomeric, mono- and/or multifunctional substance, which can be cured via light (component B), enables the 3D-structuring of the formulations, preferably via Hot Lithography using temperatures in the build-up step of 40 to 150°C.

Preferably, the resin composition at room temperature (20°C) has a viscosity > 5 Pa*s, preferably > 50 Pa*s. These viscosities result from the particularly high content of component A which provide the remarkably high temperature resistance of the materials formed from the inventive resin composition.

The use of the inventive resin is characterized by the composition being subjected to a light-induced structuring step followed by a heat-induced curing step. As will be apparent to one skilled in the art, the curing process via light is very likely an additive manufacturing process, more preferably a 3D printing process with the respective thermal post-processing steps to obtain the final product having the desired chemical, mechanical and thermal properties. The inventive resin formulations may thus be used as resin formulations for making three-dimensional objects via additive manufacturing. Resulting 3D-parts offer exceptional heat and chemical resistance, while exhibiting high strength, hardness and stiffness. Possible applications for such additively manufactured 3D-objects from said materials may be tools for injection moulding, deep drawing, thermoforming, extrusion and/or pressing, injection moulding cores, dies for continuous casting, engine blades, aerospace applications such as spacecraft or heat shield parts, boat and naval applications, impellers, radomes, satellite structures, automotive parts (e.g. housings and interior facings, parts in contact with fuel such as connectors), printed circuit boards, packaging and cooling architectures for electronics, chip mounting, robotic hands, battery storage enclosures, healthcare applications (e.g. parts exposed to high temperature for sterilisation), surgical instruments (e.g. retractors, dilators, dissectors), intraoral devices such as surgical guides for dental applications or other examples where there is a demand for mechanical stability at high temperatures (> 150°C).

In a preferred embodiment, the light-induced structuring step is carried out at elevated processing temperatures of the resin composition, preferably at a temperature between 40°C and 150°C, more preferably between 60°C and 120°C, even more preferably between 70°C and 110°C. This is done in order to provide solubility or miscibility for the high content of component A and to reduce the viscosity of the inventive resin composition during the structuring step.

In a preferred embodiment, a layer of the resin composition is formed on a carrier plate, preferably by means of a recoater blade, the resin composition preferably having a viscosity at said processing temperature of 0.01 to 40 Pa*s, preferably of 0.1 to 25 Pa*s.

The light-induced structuring step is preferably performed for building a shaped body by 3D printing, wherein layers of said shaped body are formed one after the other and one on top of each other by each forming a material layer of predetermined thickness of the resin composition between a transparent or at least partially transparent carrier such as a plate, a carrier film or a bottom of a vat, and a mechanically adjustable construction platform, or the shaped body at least partially formed on the construction platform and wherein the so defined material layer is cured in a position-selective manner, in particular by irradiation through the transparent or at least partially transparent carrier, to provide the desired shape of the shaped body layer.

According to a preferred embodiment, the light-induced structuring step is carried out by using a first radiation source, wherein the radiation of the first radiation source is applied to the resin composition through the transparent carrier plate, and heating of the layer of resin composition to be structured is carried out by using a second radiation source, wherein the carrier plate is essentially impermeable for the radiation of the second radiation source. In this way, the carrier plate is heated by the radiation of the second radiation source, said radiation essentially not entering into the layer of the resin composition, and resin composition thus indirectly heated via the carrier plate is structured by the radiation of the first radiation source.

After the light curing step of the inventive resin has been performed, a heat-induced curing step is performed to yield further cure. The heating step may be performed within a temperature region of 150-400°C and may be divided into one or more individual curing steps with defined time intervals at respectively defined temperatures. Non-limiting examples for such heat-induced curing steps may be: Method A → 2h at 170°C, 4h at 220°C and 2h at 250°C; Method B → 1h at 180°C, 1h at 220°C, 4h at 250°C and 1h at 300°C.

The inventive item that results from subjecting the inventive resin composition to a light-induced structuring step followed by a heat-induced curing step is preferably characterized in that the item has a heat deflection temperature (HDT(B)) ranging from 250°C to 360°C, a storage modulus of > 1 GPa up to temperatures in the range from 250°C to 360°C, a glass transition temperature ranging from 250°C to 360°C and a flexural modulus at room temperature (20°C) of > 3 GPa.

As used herein, the term "polymer" refers to a molecule composed of repeating structural units connected by covalent chemical bonds and characterized by a substantial number of repeating units (e.g., equal to or greater than 10 repeating units and often equal to or greater than 50 repeating units and often equal to or greater than 100 repeating units) and a high molecular weight (e.g. greater than or equal to 5000 Da, 10000 Da or 20000 Da). Polymers are commonly the polymerisation product of one or more monomer precursors. The term "polymer" includes homopolymers, or polymers consisting essentially of a single repeating monomer subunit. The term "polymer" also includes copolymers which are formed when two or more different types of monomers are linked in the same polymer. Copolymers may comprise two or more monomer subunits, and include random, block, alternating, segmented, grafted, tapered and other copolymers. The term "polymer" also includes cross-linked polymers.

Herein, an "oligomer" refers to a molecule composed of repeating structural units connected by covalent chemical bonds and characterized by a number of repeating units less than that of a polymer (e.g., equal to or less than 10 repeating units) and a lower molecular weight than polymers (e.g. less than 5,000 Da or 2,000 Da). Oligomers may be the polymerisation product of one or more monomer precursors. In an embodiment, an oligomer or a monomer cannot be considered a polymer in its own right.

A "prepolymer" refers to a polymer or oligomer, the molecules of which are capable of entering, through reactive groups, into further polymerisation.

Oligomers and polymer mixtures can be characterized and differentiated from other mixtures of oligomers and polymers by measurements of molecular weight and molecular weight distributions.

The embodiments disclosed in the present invention are described in more detail by reference to the following non-limiting examples. These examples are presented for the purpose of illustration only and shall not be construed as limiting the scope of the invention as defined by the appended claims.

All chemicals used herein were purchased from commercial sources and used without further purification.

Curable compositions according to the present invention were prepared by mixing the respective compounds in a beaker at a temperature of 60-110°C. The resins were mixed until they became homogeneous formulations.

Rheological measurements for all materials were performed on an MCR 92 from Anton Paar. All samples were measured in rotation mode (PP-25, 50*s⁻¹, temperature window 50-110°C, heating rate 0.05°C*s⁻¹, gap size: 1 mm). Typically, formulations with a viscosity below 1 Pa*s at ambient conditions or slightly higher temperatures of < 50°C are required for conventional L-AMTs and temperatures above 50°C are rarely reached nor suitable. For resin viscosities higher than 1 Pa*s at temperatures higher than 50°C, L-AMTs for highly viscous resins at elevated temperatures (e.g. Hot Lithography) become the printing processes of choice.

(Thermo)mechanical test specimens of the final materials according to the present invention were fabricated from the respective light-curable compositions via Hot Lithography on a Caligma 200 from the company Cubicure GmbH. All printer parts in contact with the formulations (i.e. material vat, recoating unit, recoating blade and building platform) were heated to a temperature in the range of 45°C to 110°C, depending on the adjusted printing temperature for each formulation. All 3D-parts were printed with a scan speed of 12000 mm*s⁻¹, a laser intensity of 155 mW and a layer thickness of 50 or 100 µm. The hatching distance was set to 15 µm in one direction and the laser spot had a diameter of 25 µm on the upper surface of the material vat. A maximum of 10 repetitions of laser irradiation were performed per layer, depending on the reactivity of the respective formulations.

Thermal post-processing was conducted in a Carbolite Gero LHT oven with a temperature protocol of:
Method A → 2h at 170°C, 4h at 220°C and 2h at 250°C
Method B → 1h at 180°C, 1h at 220°C, 4h at 250°C and 1h at 300°C.

Heat Deflection Temperature (HDT) measurements were performed on an HDT/Vicat 3-300 standard. HDT (B) and HDT (C) tests were performed according to DIN EN ISO 75-1:2013.

The sample specimens (with a rectangular geometry of 80 x 10 x 4 mm³) were tested flatwise with a loading force of 0.45 MPa for HDT(B) and 8 MPa for HDT(C). The starting temperature for each measurement was set to 26°C and the samples were subjected to the respective loading force for 5 min. Then, a temperature ramp of 120 K*min⁻¹ was performed.

DMA measurements to identify the storage modulus and glass transition temperature T_{g} were performed on a Dynamic Mechanical Analyzer (TA Instruments 2980, New Castle, DE, USA) with a set temperature program (30°C to 400°C) and a heating rate of 3°C*min⁻¹. Samples with a box geometry of 25 x 4 x 2 mm³ were measured in a 3-point-bending mode. The testing conditions were set to a frequency of 1 Hz, an amplitude of 20 µm and a preload force of 0.1 N. The glass transition temperature T_{g} is derived from the maximum value of the loss factor tanδ.

A ProLine Z010 TH material tester from Zwick/Roell was used for 3-point-bending tests of the 3D-printed materials to identify the flexural modulus and flexural strength. The test was performed according to DIN EN ISO 178:2013. The flexural modulus of the rectangular samples (80 x 10 x 4 mm³) was recorded at a rate of 2 mm min⁻¹, while the flexural strength was evaluated subsequently at 10 mm min⁻¹.

### Comparative Example 1: Curable resins with monofunctional maleimides and polymers thereof MM1-3

**Table 1: Formulations for Comparative Example 1 (reference matrices Refl, Ref2 and formulations MM1-3)**

| Component | Refl (wt%) | MM1 (wt%) | MM2 (wt%) | Ref2 (wt%) | MM3 (wt%) |
|---|---|---|---|---|---|
| Multifunctional Acrylate (Bomar 741-XS) | 57 | 46 | 34 | 50 | 40 |
| Multifunctional Methacrylate (tricyclodecanedime thanol dimethacrylate) | 43 | 34 | 26 | - | - |
| Multifunctional Epoxy Acrylate (1,4-butanediylbis[oxy(2 -hydroxy-3,1-propanediyl)] diacrylate) | - | - | - | 50 | 40 |
| Monofunctional Maleimide (2, 6-xylylmaleimide) | - | 20 | 20 | - | 20 |
| Inorganic Filler (BaSO₄) | - | - | 20 | - | - |

Preparation of resin formulations:
Ref1: 28.5 g of the multifunctional acrylate Bomar 741-XS and 21.5 g of the multifunctional methacrylate (tricyclodecanedimethanol dimethacrylate) were homogenized together with 0.5 g of the photoinitiator ethyl (2,4,6-trimethylbenzoyl) phenyl phosphinate (TPO-L).
MM1: 23 g of the multifunctional acrylate Bomar 741-XS, 17 g of the multifunctional methacrylate (tricyclodecanedimethanol dimethacrylate) and 10 g of the monofunctional 2,6-xylylmaleimide were homogenized together with 0.5 g of the photoinitiator TPO-L.
MM2: 17 g of the multifunctional acrylate Bomar 741-XS, 13 g of the multifunctional methacrylate (tricyclodecanedimethanol dimethacrylate) and 10 g of the monofunctional 2,6-xylylmaleimide were homogenized together with 0.5 g of the photoinitiator TPO-L and 10 g of the inorganic filler (BaSO₄).
Ref2: 25 g of the multifunctional acrylate Bomar 741-XS and 25 g of the multifunctional epoxy acrylate (1,4-butanediylbis[oxy(2-hydroxy-3,1-propanediyl)] diacrylate) were homogenized together with 0.5 g of the photoinitiator TPO-L.
MM3: 20 g of the multifunctional acrylate Bomar 741-XS, 20 g of the multifunctional epoxy acrylate (1,4-butanediylbis[oxy(2-hydroxy-3,1-propanediyl)] diacrylate) and 10 g of the monofunctional 2,6-xylylmaleimide were homogenized together with 0.5 g of the photoinitiator TPO-L.

Thermal post-processing of the 3D-structured samples described above has been performed according to method A.

**Table 2: Results of Comparative Example 1 (formulations and polymers of Ref1, Ref2 and MM1-3)**

| Property | Desirable Range | Refl | MM1 | MM2 | Ref2 | MM3 |
|---|---|---|---|---|---|---|
| Viscosity of formulation (Pa*s) | 0.01<x<40 | | | | | |
| | at 50°C | 2.84 | 1.15 | 1.13 | 1.24 | 1.15 |
| | at 70°C | 0.48 | 0.21 | 0.24 | 0.28 | 0.25 |
| | at 90°C | 0.14 | 0.07 | 0.09 | 0.09 | 0.08 |
| | | | | | | |
| T_{HDT(B)} (°C) | > 100°C, preferably > 150°C | 134 | 158 | 164 | 59 | 75 |
| T_{HDT(C)} (°C) | > 50°C, preferably > 80°C | 66 | 78 | 86 | - | - |
| T_{2GPa} (°C) | > 50°C, preferably > 100°C | 56 | 63 | 103 | - | - |
| T_{1GPa} (°C) | > 120°C, preferably > 150°C | 100 | 132 | 156 | 53 | 84 |
| T_{g} (°C) | > 150°C, preferably > 200°C | 150 | 220 | 219 | 82 | 136 |
| Flexural Strength (MPa) | > 80 MPa, preferably > 100 MPa | 120 | 124 | 52 | 75 | 112 |
| Flexural Modulus (MPa) | > 2500 MPa, preferably > 3000 MPa | 3470 | 3670 | 3910 | 2060 | 2890 |

| | | | | | | |
|---|---|---|---|---|---|---|
| T_{HDT(B)}: heat deflection temperature HDT(B) measured according to DIN EN ISO 75-1:2013 T_{HDT(C)}: heat deflection temperature HDT(C) measured according to DIN EN ISO 75-1:2013 T_{2GPa}: temperature at which storage modulus G' reaches 2 GPa T_{1GPa}: temperature at which storage modulus G' reaches 1 GPa T_{g}: glass transition temperature recorded at maximum of tanδ | | | | | | |

Discussion:
Two (meth)acrylate-based reference materials (a fairly rigid matrix Refl and a rather soft matrix Ref2) have been used to evaluate the influence of maleimide addition to the final material performance. As expected, monofunctional maleimides, with their fairly good solubility and low melting temperatures (< 120°C for 2,6-xylylmaleimide), do not significantly impact the overall viscosities of the final formulations, especially at low contents < 20 wt%.

However, a significant increase in heat deflection temperature and glass transition temperature can be observed from the reference polymer of Refl to the monofunctional maleimide-based polymer of MM1. The addition of inorganic filler further pushes the stiffness and overall moduli (see polymer of MM2), while maintaining the improved heat deflection and glass transition temperatures.

The softer polymer matrix from Ref2 also can be significantly improved towards higher heat deflection and glass transition temperatures by the addition of 20 wt% 2,6-xylylmaleimide. Improvements in strength and stiffness are also evident for the polymer of MM3 compared to the material from Ref2. The outlined examples confirm the effect of improved heat deflection and stability, strength and stiffness via maleimide addition to standard light-curable formulations and constitute the lower bound of maleimide content or contribution toward the material performance of the final 3D-part.

### Example 1: Curable resin with difunctional maleimides, citraconimides and comonomers and polymers thereof (DM1-4)

**Table 3: Formulations for Example 1 (reference matrix Ref1 and formulations DM1-5)**

| Component | Refl (wt%) | DM1 (wt%) | DM2 (wt%) | DM3 (wt%) | DM4 (wt%) | DM5 (wt%) |
|---|---|---|---|---|---|---|
| Multifunctional Acrylate (Bomar 741-XS) | 57.0 | 11.0 | 11.0 | 9.0 | 9.0 | |
| Multifunctional Methacrylate (tricyclodecane dimethanol dimethacrylate) | 43.0 | 9.0 | 9.0 | 7.0 | 7.0 | |
| Multifunctional Acrylate (tricyclodecane dimethanol diacrylate) | | | | | | 36 |
| Multifunctional Epoxy Acrylate (1,4-butanediylbis[oxy (2-hydroxy-3,1-propanediyl)] di-acrylate) | | | | | | 4 |
| BMI resin (eutectic bismaleimide mixture of 4,4'-diphenylmethane bismaleimide, m-xylylene bismaleimide and 1,6-bismaleimido-(trimethyl) hexa ne (isomeric mixture of 2,2,4- and 2,4,4-trimethyl) | - | 80.0 | - | - | - | |
| BMI resin (m-xylylenebismale mide) | - | - | 26.6 | 21.2 | 21.2 | 60 |
| BMI resin (4,4'-diphenylmethane bismaleimide) | - | - | 21.8 | 17.5 | 17.5 | |
| Citraconimide resin (1,3-bis(citraconimi domethyl)benzen e) | - | - | - | 20.0 | - | |
| Comonomer (4,4'-bis(o-propenylphenoxy )benzophenone) | - | - | 31.6 | 25.3 | 25.3 | |
| Inorganic Filler (BaSO₄) | - | - | - | - | 20.0 | |

Preparation of resin formulations:
DM1: 5.50 g of the multifunctional acrylate Bomar 741-XS, 4.50 g of the multifunctional methacrylate (tricyclodecanedimethanol dimethacrylate) and 40.00 g of the BMI resin mixture (eutectic bismaleimide mixture of 4,4'-diphenylmethane bismaleimide, m-xylylene bismaleimide and 1,6-bismaleimido-(trimethyl)hexane (isomeric mixture of 2,2,4- and 2,4,4-trimethyl)) were homogenized together with 0.50 g of the photoinitiator TPO-L.
DM2: 5.50 g of the multifunctional acrylate Bomar 741-XS, 4.50 g of the multifunctional methacrylate (tricyclodecanedimethanol dimethacrylate), 13.3 g of the difunctional m-xylylenebismalemide, 10.90 g of the difunctional 4,4'-diphenylmethanebismaleimide and 15.80 g of the diallyl comonomer 4,4'-bis(o-propenylphenoxy)benzophenone were homogenized together with 0.50 g of the photoinitiator TPO-L.
DM3: 4.50 g of the multifunctional acrylate Bomar 741-XS, 3.50 g of the multifunctional methacrylate (tricyclodecanedimethanol dimethacrylate), 10.60 g of the difunctional m-xylylenebismalemide, 8.75 g of the difunctional 4,4'-diphenylmethanebismaleimide, 10.00 g of the difunctional citraconimide 1,3-bis(citraconimidomethyl)benzene and 12.65 g of the diallyl comonomer 4,4'-bis(o-propenylphenoxy)benzophenone were homogenized together with 0.50 g of the photoinitiator TPO-L.
DM4: 4.50 g of the multifunctional acrylate Bomar 741-XS, 3.50 g of the multifunctional methacrylate (tricyclodecanedimethanol dimethacrylate), 10.60 g of the difunctional m-xylylenebismalemide, 8.75 g of the difunctional 4,4'-diphenylmethanebismaleimide and 12.65 g of the diallyl comonomer 4,4'-bis(o-propenylphenoxy)benzophenone were homogenized together with 0.50 g of the photoinitiator TPO-L and 10.00 g of the inorganic filler (BaSO₄).
DM5: 18 g of the multifunctional acrylate (tricyclodecanedimethanol diacrylate), 2.00 g of the multifunctional epoxy acrylate (1,4-bu-tanediylbis[oxy(2-hydroxy-3,1-propanediyl)] di-acrylate), 30.00 g of the difunctional m-xylylenebismalemide were homogenized together with 0.50 g of the photoinitiator TPO-L.

Thermal post-processing of the 3D-structured samples described above has been performed according to method B.

**Table 4: Results for Example 1 (formulations and polymers of Refl and DM1-5)**

| Property | Desirable Range | Refl | DM1 | DM2 | DM3 | DM4 | DM5 (prior to thermal post-process ing) | DM5 |
|---|---|---|---|---|---|---|---|---|
| Viscosit y of formulat ion (Pa*s) | 0.01<x<40 | | | | | | | |
| | at 50°C | 2.84 | 81.57 | 67.52 | 72.82 | >550 | | |
| | at 70°C | 0.48 | 3.89 | 3.36 | 3.30 | 22 | | - |
| | at 90°C | 0.14 | 0.49 | 0.48 | 0.45 | 2.45 | | |
| | | | | | | | | |
| T_{HDT(B)} (°C) | > 250°C, preferably > 300°C | 134 | >300 | >300 | >300 | >300 | | >300 |
| T_{HDT(C)} (°C) | > 100°C, preferably > 150°C | 66 | 230 | 160 | 149 | 173 | 53 | >250 |
| T_{2GPa} (°C) | > 150°C, preferably > 200°C | 56 | 173 | 212 | 158 | 223 | <30 | 262 |
| T_{1GPa} (°C) | > 250°C, preferably > 300°C | 100 | >350 | 297 | 292 | 301 | <30 | >300 |
| T_{g} (°C) | > 300°C, preferably > 340°C | 150 | >350 | 340 | 340 | 340 | 108 | >300 |
| Flexural Strength (MPa) | > 80 MPa, preferably > 100 MPa | 120 | 117 | 42 | 68 | 55 | | - |
| Flexural Modulus (MPa) | > 2500 MPa, preferably > 3000 MPa | 3470 | 3130 | 3830 | 3380 | 3820 | | - |

| | | | | | | | | |
|---|---|---|---|---|---|---|---|---|
| T_{HDT(B)}: heat deflection temperature HDT(B) measured according to DIN EN ISO 75-1:2013 T_{HDT(C)}: heat deflection temperature HDT(C) measured according to DIN EN ISO 75-1:2013 T_{2GPa}: temperature at which storage modulus G' reaches 2 GPa T_{1GPa}: temperature at which storage modulus G' reaches 1 GPa T_{g}: glass transition temperature recorded at maximum of tanδ | | | | | | | | |

The combination of (meth)acrylate-based light-curable components with bismaleimide(BMI)- and citraconimide(CI)-based thermoset components yields 3D-printed parts (polymers of DM1-5) with substantially improved heat resistance, which is supported by heat deflection temperatures T_{HDT(B)} of more than 300°C as a unique characteristic for 3D-parts from L-AMTs. The rather high force load in HDT(C) testing further proves the high heat resistance even upon high forces with temperatures exceeding 150°C, even roughly 230°C for the high BMI-content polymer of DM1 and even > 250°C for the BMI-based resin DM5. This confirms the highest heat resistance for materials with BMIs that exhibit a high content of aromatic groups (e.g. DM5). Furthermore, the need for a thermal post-processing step to reach the desired (thermo)mechanical properties is evident by comparing DM5 prior (heat deflection temperature << 150°C)and after thermal post-processing (heat deflection temperature >> 250°C). The glass transition temperatures lie well-above 300°C for the BMI-based polymers DM1-5. Strength and stiffness are also in the preferable range of > 100 MPa (flexural strength) and > 3000 MPa (flexural modulus) for the 3D-part from DM1. Other BMI-materials also show properties in the preferable range, except for flexural strength, which can be explained by their rather brittle behaviour. This causes the test specimens to break early in the bending test. Nevertheless, the flexural strength at higher temperatures is expected to uphold contrary to standard (meth)acrylate-based polymers, which have limited heat resistance. The BMI-material with the highest BMI content (80 wt%, polymer of DM1) shows the best performance, but processability is better with samples DM2-4 as they additionally contain the comonomer 4,4'-bis(o-propenylphenoxy)benzophenone. This can also be observed by the higher viscosity of DM1 compared to DM2 and DM3. DM4 exhibits higher viscosities due to the inorganic filler present in the formulation.

### Example 2: Curable resin with oligomeric maleimides and polymers thereof OM1

**Table 5: Formulations for Example 2 (reference matrix Ref1 and formulation OM1)**

| Component | Refl (wt%) | OM1 (wt%) |
|---|---|---|
| Multifunctional Acrylate (Bomar 741-XS) | 57.0 | 10.0 |
| Multifunctional Methacrylate (tricyclodecanedimethanol dimethacrylate) | 43.0 | 8.0 |
| BMI resin (m-xylylenebismalemide) | - | 23.9 |
| BMI resin (4,4'-diphenylmethanebismaleimide) | - | 19.7 |
| Oligomeric BMI resin (copolymer from 4,4'-diphenylmethanebismaleimide and 4,4'-methylenedianiline) | - | 10.0 |
| Comonomer (4,4'-bis(o-propenylphenoxy)benzophenone) | - | 28.4 |

Preparation of resin formulations:
OM1: 5.00 g of the multifunctional acrylate Bomar 741-XS, 4.00 g of the multifunctional methacrylate (tricyclodecanedimethanol dimethacrylate), 11.95 g of the difunctional m-xylylenebismalemide, 9.85 g of the difunctional 4,4'-diphenylmethanebismaleimide, 5.00 g of the oligomeric BMI resin (copolymer from 4,4'-diphenylmethanebismaleimide and 4,4'-methylenedianiline) and 14.20 g of the diallyl comonomer 4,4'-bis(o-propenylphenoxy)benzophenone were homogenized together with 0.50 g of the photoinitiator TPO-L.

Thermal post-processing of the 3D-structured samples described above has been performed according to method B.

**Table 6: Results for Example 2 (formulations and polymers of Ref1 and OM1)**

| Property | Desirable Range | Refl | OM1 |
|---|---|---|---|
| Viscosity of formulation (Pa*s) | 0.01<x<40 | | |
| | at 50°C | 2.84 | > 1500 |
| | at 70°C | 0.48 | 90 |
| | at 90°C | 0.14 | 15 |
| T_{HDT(B)} (°C) | > 250°C, preferably | 134 | - |
| | > 300°C | | |
| T_{HDT(C)} (°C) | > 100°C, preferably | 66 | 127 |
| | > 150°C | | |
| T_{2GPa} (°C) | > 150°C, preferably | 56 | 168 |
| | > 200°C | | |
| T_{1GPa} (°C) | > 250°C, preferably | 100 | 233 |
| | > 300°C | | |
| T_{g} (°C) | > 300°C, preferably | 150 | 295 |
| | > 340°C | | |
| Flexural Strength (MPa) | > 80 MPa, preferably | 120 | - |
| | > 100 MPa | | |
| Flexural Modulus (MPa) | > 2500 MPa, preferably | 3470 | - |
| | > 3000 MPa | | |

| | | | |
|---|---|---|---|
| T_{HDT(B)}: heat deflection temperature HDT(B) measured according to DIN EN ISO 75-1:2013 T_{HDT(C)}: heat deflection temperature HDT(C) measured according to DIN EN ISO 75-1:2013 T_{2GPa}: temperature at which storage modulus G' reaches 2 GPa T_{1GPa}: temperature at which storage modulus G' reaches 1 GPa T_{g}: glass transition temperature recorded at maximum of tanδ | | | |

A BMI-based resin containing less than 20 wt% light-curable (meth)acrylate components, roughly 30 wt% allyl-based comonomer and additionally a BMI-copolymer (copolymer from 4,4'-diphenylmethanebismaleimide and 4,4'-methylenedianiline, 10 wt%) was evaluated. The viscosity is increased compared to the above tested DMs. However, processability is reached at temperatures around 90°C and 3D-parts have been successfully fabricated. The observed heat deflection temperature (127°C for HDT(C)) and the glass transition temperature of above 290°C is below the other BMI examples, but still further supports the striking performance of the 3D-structured BMI materials. It is clear to the person skilled in the art that the use of a BMI-copolymer yields benefits in thermal shrinkage, gel content and part cracking.

### BRIEF DESCRIPTION OF THE FIGURES

Fig. 1 shows a schematic configuration of a high temperature additive manufacturing device used for curing the curable compositions according to the present invention by means of a 3D printing process,

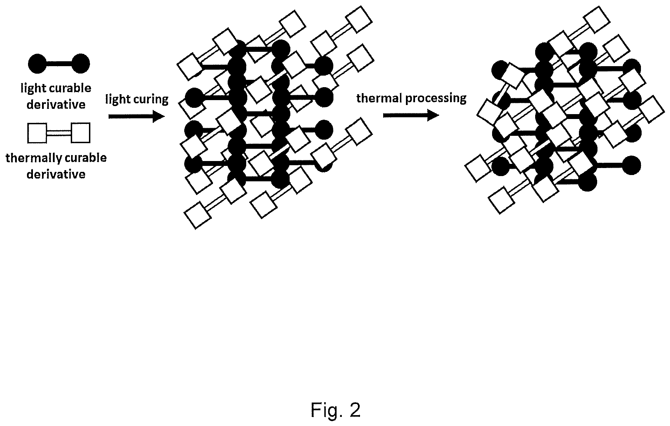

Fig. 2 represents a schematic example for the network formation via a first light curing step and subsequent heat-induced curing step (i.e. thermal post-processing),

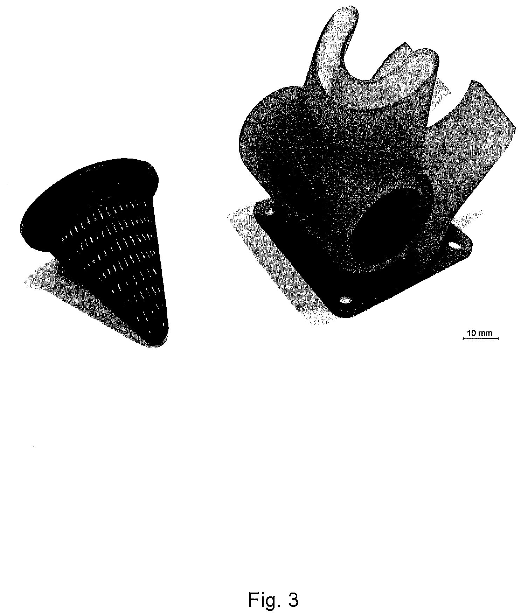

Fig. 3 shows 3D-parts printed from formulation DM1 (cone filter, post-processed; fan duct, green part),

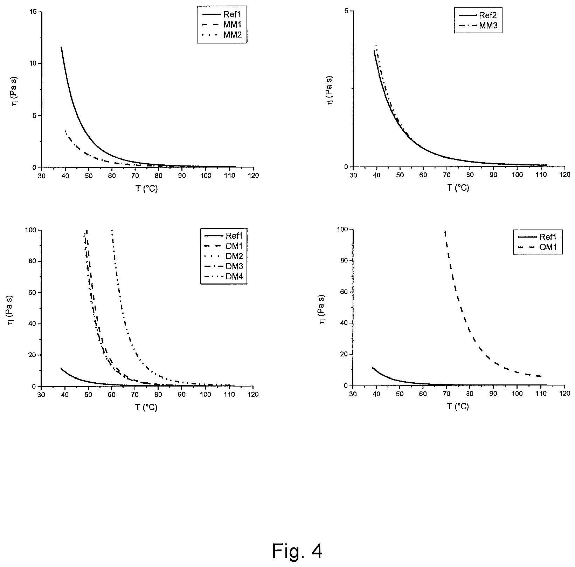

Fig. 4 shows the data retrieved from the viscosity measurements of the curable formulations according to the Comparative Example 1 and Examples 1 and 2 at varying temperatures and

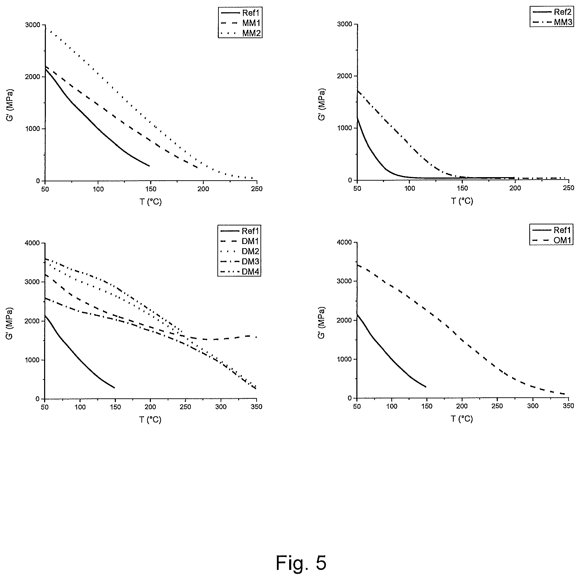

Fig. 5 shows the data retrieved from the DMA measurements (storage modulus G') of the printed and post-cured polymers according to the Comparative Example 1 and Examples 1 and 2.

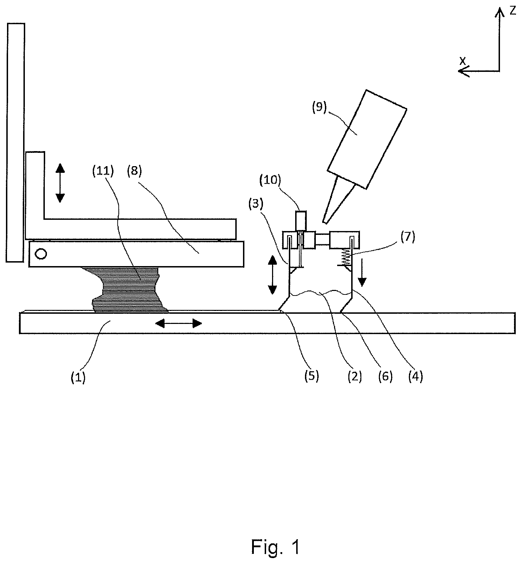

In Fig. 1, reference numeral 1 denotes a material support, on which a material layer 11 is arranged. Spaced from the material support 1, a construction platform 8 is arranged, which is height-adjustable in the z direction and is tiltably mounted about the axis 4. Between the build platform 8 and the material support 1, some material layers 11 are already constructed. The material support 1 is translationally movable along the x-direction perpendicular to the z-direction.

Furthermore, a material introduction device 3 is provided which comprises a first recoater blade 5 and a second recoater blade 6. The first recoater blade 5 is height adjustable by means of a recoater motor 10 in the z direction and the second recoater blade 6 has a spring 7 which holds the second recoater blade 6 in abutment with the material support 1 in the z direction. Between the two recoater blades 5 and 6 a material reservoir 2 is formed, which can be supplied by means of a conveyor 9 with the inventive resin composition.

In the phase of the method shown in Fig. 1, the material support 1 is in the second position. The construction platform 8 is lowered in the direction of the material support 1, so that a new material layer 11 of the inventive resin composition can be formed by the material layer 11 and is irradiated selectively on the material support 1 by means of a radiation source, not shown, from below through the material support 1 and thereby structured and solidified. The material layer 11 was applied during the movement of the material support 1 in the second position by the first recoater blade 5.

## Claims

1. Resin composition for three-dimensional printing, the resin composition comprising
a) a heat curable component A having one or more chemical species chosen from the group comprised of monomers and/or oligomers and/or prepolymers of maleimide derivatives according to formula (I) 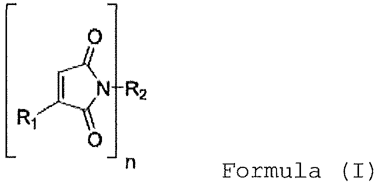 as well as isomers thereof, in particular itaconimide, wherein
- n is an integer between 1 and 10
- R1 represents H, CH3 or CH2,
- R2 independently represents a linear, branched or cyclic C5-C40 aliphatic or aromatic residue of one or more of the group consisting of phenyl, benzyl, phenethyl, methyl, ethyl, propyl, butyl, pentyl, hexyl, octyl, decanyl, dodecanyl, acetic, propanoic, butanoic, pentanoic, undecanoic, dodecanoic, benzoic acid and corresponding esters, alkyl or aromatic esters, cyclopropyl, cyclobutyl, cyclopentyl, cyclohexyl, cycloheptyl, cyclooctyl, adamantyl, isobornyl, propenyl, biphenyl, naphthyl, anthracenyl, pyrenyl, bis(methylene)oxy, bis(ethylene)oxy, bis(phenyl)methane, bis(phenyl)ethane, bis(phenyl)propane, bis(phenyl)butane, bis(phenyl)ether, bis(phenyl)thioether, bis(phenyl)amino and bis(phenyl)sulfone, which are optionally substituted with one or more C1-C6 alkyl, C1-C6 alkoxy, C1-C6 thioether, halogen, -NO2, -SO3H, -CF3, -OH, -NH2, -SH, -CN, -isocyanato, -trimethoxysilyl, -triethoxysilyl or a polymerisable group from the substance classes of maleimide and citraconimide compounds and/or isomers thereof, in particular itaconimide.
and
b) a light-curable component B having one or more chemical species chosen from the group comprised of (meth)acrylate, (meth)acrylamide, vinyl esters, vinyl ether, vinyl, allyl, alkinyl or styrenic compounds as well as derivatives thereof substituted with at least one molecule from the group from which component A is chosen, wherein the amount of component A ranges from 30 wt% to 95 wt% based on the total weight of components A and B and the amount of the light-curable component B ranges from 5 to 70 wt%, based on the total weight of components A and B **characterized in that** component A comprises a species of component A with n being an integer from 2 to 10 having an aromatic residue linked to the N-atom of the maleimide ring of Formula I, preferably via a methylene group, in an amount ranging from 20 wt% to 100 wt%, preferably from 30 wt% to 100 wt% and more preferably from 40 wt% to 100 wt%, based on the total weight of component A comprised in the resin composition.

2. Resin composition according to claim 1, **characterized in that** the amount of component A ranges from 40 wt% to 95 wt%, preferably from 50 wt% to 95 wt%, more preferably from 60 wt% to 95 wt% and even more preferably from 70 wt% to 95 wt% based on the total weight of components A and B and the amount of the light-curable component B ranges from 5 wt% to 60 wt%, preferably from 5 wt% to 50 wt%, more preferably from 5 wt% to 40 wt%, even more preferably from 5 wt% to 30 wt% based on the total weight of components A and B.

3. Resin composition according to claim 1 or 2,, **characterized in that** component A further comprises a species of component A with n being an integer from 2 to 10, in which R2 is an aliphatic residue in an amount ranging from 0.5 wt% to 50 wt%, preferably from 3 wt% to 30 wt% and more preferably from 5 wt% to 15 wt%, based on the total weight of component A comprised in the resin composition.

4. Resin composition according to claim 1, 2 or 3, **characterized in that** component A comprises a species of component A with n being 1, in which R2 independently represents a linear, branched or cyclic C5-C40 aliphatic or aromatic residue of one or more of the group consisting of phenyl, benzyl, phenethyl, methyl, ethyl, propyl, butyl, pentyl, hexyl, octyl, decanyl, do-decanyl, acetic, propanoic, butanoic, pentanoic, undecanoic, dodecanoic, benzoic acid and corresponding esters, alkyl or aromatic esters, cyclopropyl, cyclobutyl, cyclopentyl, cyclohexyl, cycloheptyl, cyclooctyl, adamantyl, isobornyl, propenyl, biphenyl, naphthyl, anthracenyl, pyrenyl, (methylene)oxy, (ethylene)oxy, which are optionally substituted with one or more C1-C6 alkyl, C1-C6 alkoxy, C1-C6 thioether, halogen, - NO2, -SO3H, -CF3, -OH, -NH2, -SH, -CN, -isocyanato, - trimethoxysilyl or -triethoxysilyl, in an amount ranging from 0.5 wt% to 30 wt%, preferably from 1 wt% to 20 wt% and more preferably from 5 wt% to 20 wt%, based on the total weight of component A comprised in the resin composition.

5. Resin composition according to any one of claims 1 to 4, **characterized in that** component A comprises one or more of the group consisting of N-phenylmaleimide, 2,6-xylylmaleimide, N,N'-m-phenylenebismaleimide, N,N'-(4-methyl-m-phenylene)-bismaleimide, 4,4'-diphenylmethanebismaleimide, m-xylylenebismaleimide, 1,3-bis(citraconimidomethyl)benzene, 1,6-bismaleimido-(trimethyl)hexane (isomeric mixture of 2,2,4- and 2,4,4-trimethyl) and/or oligomers and/or prepolymers thereof.

6. Resin composition according to any one of claims 1 to 5, **characterized in that** the composition comprises toughness modifiers selected from the group consisting of thermoplastic resins, in particular polyethylene oxide and polypropylene oxide, reactive rubbers, in particular maleimido-terminated butadiene-acrylonitrile copolymer and/or monomers comprising reactive maleimide- or citraconimide groups with flexible linkers, in particular long aliphatic chains and/or ethylene glycol spacers, monomers such as Q-Bond (a bismaleimide 36 carbon cycloaliphatic branched structure) and/or MIA (an oligomeric polyether bismaleimide, poly(oxybutylene)-di(2-maleimidoacetate), oligomers and/or prepolymers thereof.

7. Resin composition according to any one of claims 1 to 6, **characterized in that** component B comprises a multifunctional (meth)acrylate and/or a mixture of mono- and multifunctional (meth)acrylates, in particular methyl-, ethyl-, 2-hydroxyethyl, butyl-, benzyl-, tetrahydrofurfuryl- or isobornyl(meth)acrylat, 1,4-butanedioldi(meth)acrylate, 1,6-hexanedioldi(meth)acrylate, 1,10-decanedioldi(meth)acrylat or 1,12-dodecanedioldi-(meth)acrylate, 2-(2-biphenyloxy)-ethyl(meth)acrylate, bisphenol-A-di(meth)acrylate, ethoxy- or propoxylated bisphenol-A-di(meth)acrylate (e.g. 2-[4-(2-(meth)acryloyloxyethoxyethoxy)phenyl]-2-[4-(2-(meth)acryloyloxyethoxy)phenyl]-propane) or 2,2-bis[4-(2-(meth)acryloxypropoxy)phenyl]propane, 1,6-bis-[2-(meth)-acryloyloxyethoxycarbonylamino]-2,2,4-trimethylhexane, pentaerythrittetra(meth)acrylate, tricyclodecanedimethanol di(meth)acrylate, di-, tri- or tetraethylenglycol-di(meth)acrylate and/or trimethylolpropantri(meth)acrylate.

8. Resin composition according to claim 1 to 7, **characterized in that** the resin composition comprises at least one photoinitiator suitable for radical polymerization upon light excitation, preferably light excitation within the wavelength spectrum of 150 nm to 580 nm, more preferably between 300 nm to 500 nm, preferably in amounts of 0.01 wt% to 10 wt%, preferably 0.1 wt% to 7 wt%, more preferably 0.2 wt% to 5 wt% based on the weight of components A and B.

9. Resin composition according to claim 8, **characterized in that** the at least one photoinitiator is, alone or in combination with each other, 2-hydroxy-2-methylpropiophenone, 1-hydroxycyclohexyl phenyl ketone, methyl phenyl glyoxylates, 2-benzyl-2-(dimethylamino)-4'-morpholinobutyrophenone, [1-(4-phenylsulfanylbenzoyl)heptylideneamino]benzoate, [1-[9-ethyl-6-(2-methylbenzoyl)carbazol-3-yl]ethylideneamino] acetate, bis (cyclopentadienyl) bis [2,6-difluoro-3-(1-pyrryl) phenyl] titanium, acyl- or bisacyl-phosphine oxide-based initiators, in particular 2,4,6-trimethylbenzoyldiphenylphosphine oxide (TPO), ethyl-(2,4,6-trimethylbenzoyl)phenyl phosphinate (TPO-L), phenylbis(2,4,6-triraethylbenzoyl)phosphine oxide (BAPO), ethyl (3-benzoyl-2,4,6-trimethylbenzoyl)phenyl phosphinate, acyl-, bisacyl- or tetraacylgermanes, in particular bis(4-methoxybenzoyl)diethylgermane (BMDG), acyl-, bisacyl- or tetraacylsilanes, acyl-, bisacyl- or tetraacylstannanes., benzophenones, in particular benzophenone, 4-methyl benzophenone and/or 4,4'-bis(diethylamino)benzophenone, benzoin, diketones, in particular 9,10-phenanthrenequinone, 1-phenyl-propane-1,2-dione, diacetyl or 4,4'-dichlorobenzil and/or derivatives thereof, thioxanthones, in particular 2,4-diethyl-9H-thioxanthen-9-one.

10. Resin composition according to any one of claims 1 to 9, **characterized in that** the resin composition comprises one and/or more initiators for radical polymerisation, in particular thermal initiators, preferably azo compounds, more preferably 2,2'azobis(isobutyronitrile) and/or azobis-(4-cyanovaleric acid)) and/or peroxides (e.g. dibenzoyl peroxide, dilauroyl peroxide, dicumyl peroxide, tert-butylperbenzoate, di-(tert-butyl)-peroxide) and/or 1,1,2,2-tetraphenyl-1,2-ethanediol.

11. Resin composition according to any one of claims 1 to 10, **characterized in that** the resin composition comprises at least one polymerisation inhibitor, preferably an inhibitor selected from the group consisting of hydroquinones, benzoquinones and/or phenothiazines.

12. Resin composition according to any one of claims 9 to 11, **characterized in that** photoinitiators, thermal initiators and/or polymerization inhibitors are additionally functionalized with a polymerisable functional group, which can undergo copolymerisation either with component A or component B.

13. Resin composition according to any one of claims 1 to 12, **characterized in that** component A further comprises a comonomer and/or cooligomer and/or coprepolymer, which is able to copolymerize with component A as well as with derivatives thereof, in particular a comonomer and/or cooligomer and/or coprepolymer selected from the group of alkenylphenol, alkenylphenyl ether, alkenylphenol ether, polyamine, aminophenol, amino acid hydrazine, cyanate ester, diallyl phthalate, triallyl isocyanurate, triallyl cyanurate, vinylic and/or styrenic functional groups.

14. Resin composition according to any one of claims 1 to 13, **characterized in that** the resin composition comprises at least one catalyst for the thermal curing of component A, the catalyst preferably being selected from the group consisting of tertiary amines, in particular DABCO and triethylamine, phosphines, triphenyl phosphonate, imidazoles, in particular 2-methyl-1-vinyl imidazole, organic acids and/or peroxides.

15. Resin composition according to any one of claims 1 to 14, **characterized in that** the resin composition at room temperature (20°C) has a viscosity > 5 Pa*s, preferably > 50 Pa*s.

16. Use of a resin composition according to any one of claims 1 to 15, **characterized in that** the composition is subjected to a light-induced structuring step followed by a heat-induced curing step.

17. Use according to claim 16, **characterized in that** the light-induced structuring step is carried out at elevated processing temperatures of the resin composition, preferably at a temperature between 40°C and 150°C, more preferably between 60°C and 120°C, even more preferably between 70°C and 110°C.

18. Use according to claim 17, **characterized in that** a layer of the resin composition is formed on a carrier, preferably by means of a recoater blade, the resin composition preferably having a viscosity at said processing temperature of 0.01 to 40 Pa*s, preferably of 0.1 to 25 Pa*s

19. Use according to claim 16, 17 or 18 **characterized in that** the light-induced structuring step is performed for building a shaped body by 3D printing, wherein layers of said shaped body are formed one after the other and one on top of each other by each forming a material layer of predetermined thickness of the resin composition between a transparent or at least partially transparent carrier, such as a plate, a carrier film or a bottom of a vat, and a mechanically adjustable construction platform, or the shaped body at least partially formed on the construction platform, and wherein the so defined material layer is cured in a position-selective manner, in particular by irradiation through the transparent or at least partially transparent carrier, to provide the desired shape of the shaped body layer.

20. Item produced by subjecting the resin composition according to any one of claims 1 to 15 to a light-induced structuring step followed by a heat-induced curing step.

21. Item according to claim 20, **characterized in that** the item has a heat deflection temperature (HDT(B)) ranging from 250°C to 360°C, a storage modulus of > 1 GPa up to temperatures in the range from 250°C to 360°C, a glass transition temperature ranging from 250°C to 360°C and a flexural modulus at room temperature (20°C) of > 3 GPa.

## Patentansprüche

1. Harzzusammensetzung für das 3D-Drucken, wobei die Harzzusammensetzung umfasst:
a) eine wärmehärtbare Komponente A mit einer oder mehreren chemischen Spezies, ausgewählt aus der Gruppe der Monomere und/oder Oligomere und/oder Präpolymere von Maleinimidderivaten gemäß Formel (I) 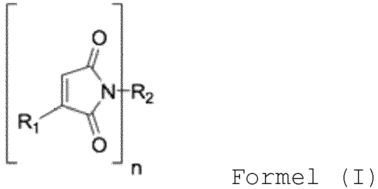 sowie deren Isomeren, insbesondere Itaconimid, wobei
- n eine ganze Zahl zwischen 1 und 10 ist
- R1 für H, CH3 oder CH2 steht,
- R2 unabhängig für einen linearen, verzweigten oder cyclischen aliphatischen oder aromatischen C5-C40-Rest steht von einem oder mehreren aus der Gruppe bestehend aus Phenyl, Benzyl, Phenethyl, Methyl, Ethyl, Propyl, Butyl, Pentyl, Hexyl, Octyl, Decanyl, Dodecanyl, Essigsäure, Propansäure, Buttersäure, Pentansäure, Undecansäure, Dodecansäure, Benzoesäure und entsprechenden Estern, Alkyl- oder aromatischen Estern, Cyclopropyl, Cyclobutyl, Cyclopentyl, Cyclohexyl, Cycloheptyl, Cyclooctyl, Adamantyl, Isobornyl, Propenyl, Biphenyl, Naphthyl, Anthracenyl, Pyrenyl, Bis(methylen)oxy, Bis(ethylen)oxy, Bis(phenyl)methan, Bis(phenyl)ethan, Bis(phenyl)propan, Bis(phenyl)butan, Bis(phenyl)ether, Bis(phenyl)thioether, Bis(phenyl)amino und Bis(phenyl)sulfon, die gegebenenfalls mit einem oder mehreren C1-C6-Alkyl, C1-C6-Alkoxy, C1-C6-Thioether, Halogen, -NO2, -SO3H, -CF3, -OH, -NH2, -SH, -CN, -Isocyanato, -Trimethoxysilyl, -Triethoxysilyl oder einer polymerisierbaren Gruppe aus den Substanzklassen der Maleimid- und Citraconimid-Verbindungen und/oder deren Isomeren, insbesondere Itaconimid, substituiert sind.
und
b) eine lichthärtbare Komponente B mit einer oder mehreren chemischen Spezies, ausgewählt aus der Gruppe bestehend aus (Meth)acrylat, (Meth)acrylamid, Vinylestern, Vinylether, Vinyl-, Allyl-, Alkinyl- oder Styrolverbindungen sowie Derivaten davon, die mit mindestens einem Molekül aus der Gruppe substituiert sind, aus der die Komponente A ausgewählt ist,
wobei die Menge der Komponente A im Bereich von 30 Gew.-% bis 95 Gew.-%, bezogen auf das Gesamtgewicht der Komponenten A und B, liegt und die Menge der lichthärtbaren Komponente B im Bereich von 5 bis 70 Gew.-%, bezogen auf das Gesamtgewicht der Komponenten A und B, liegt,
**dadurch gekennzeichnet, dass** die Komponente A eine Spezies der Komponente A umfasst, wobei n eine ganze Zahl von 2 bis 10 ist, mit einem aromatischen Rest, der an das N-Atom des Maleimidrings der Formel I gebunden ist, vorzugsweise über eine Methylengruppe, in einer Menge im Bereich von 20 Gew.-% bis 100 Gew.-%, vorzugsweise von 30 Gew.-% bis 100 Gew.-% und noch bevorzugter von 40 Gew.-% bis 100 Gew.-%, bezogen auf das Gesamtgewicht der in der Harzzusammensetzung enthaltenen Komponente A.

2. Harzzusammensetzung nach Anspruch 1, **dadurch gekennzeichnet, dass** die Menge der Komponente A im Bereich von 40 Gew.-% bis 95 Gew.-%, vorzugsweise von 50 Gew.-% bis 95 Gew.-%, stärker bevorzugt von 60 Gew.-% bis 95 Gew.-% und noch stärker bevorzugt von 70 Gew.-% bis 95 Gew.-%, bezogen auf das Gesamtgewicht der Komponenten A und B, liegt und die Menge der lichthärtbaren Komponente B im Bereich von 5 Gew.-% bis 60 Gew.-%, vorzugsweise von 5 Gew.-% bis 50 Gew.-%, stärker bevorzugt von 5 Gew.-% bis 40 Gew.-% und noch stärker bevorzugt von 5 Gew.-% bis 30 Gew.-%, bezogen auf das Gesamtgewicht der Komponenten A und B, liegt.

3. Harzzusammensetzung nach Anspruch 1 oder 2, **dadurch gekennzeichnet, dass** Komponente A weiterhin eine Spezies der Komponente A umfasst, wobei n eine ganze Zahl von 2 bis 10 ist, in der R2 ein aliphatischer Rest in einer Menge von 0,5 Gew.-% bis 50 Gew.-% ist, vorzugsweise von 3 Gew.-% bis 30 Gew.-% und noch bevorzugter von 5 Gew.-% bis 15 Gew.-%, bezogen auf das Gesamtgewicht der in der Harzzusammensetzung enthaltenen Komponente A.

4. Harzzusammensetzung nach Anspruch 1, 2 oder 3, **dadurch gekennzeichnet, dass** die Komponente A eine Spezies der Komponente A mit n gleich 1 umfasst, in der R2 unabhängig für einen linearen, einen linearen, verzweigten oder zyklischen aliphatischen oder aromatischen C5-C40-Rest steht von einem oder mehreren aus der Gruppe bestehend aus Phenyl, Benzyl, Phenethyl, Methyl, Ethyl, Propyl, Butyl, Pentyl, Hexyl, Octyl, Decanyl, Do-Decanyl, Essigsäure, Propionsäure, Buttersäure, Pentansäure, Undecansäure, Dodecansäure, Benzoesäure und entsprechende Ester, Alkyl- oder aromatische Ester, Cyclopropyl, Cyclobutyl, Cyclopentyl, Cyclohexyl, Cycloheptyl, Cyclooctyl, Adamantyl, Isobornyl, Propenyl, Biphenyl, Naphthyl, Anthracenyl, Pyrenyl, (Methylen)oxy, (Ethylen)oxy, die gegebenenfalls mit einem oder mehreren C1-C6-Alkyl, C1-C6-Alkoxy, C1-C6-Thioether, Halogen, -NO2, -SO3H, -CF3, -OH,-NH2, -SH, -CN, -Isocyanato, -Trimethoxysilyl oder - Triethoxysilyl substituiert sind, in einer Menge von 0.5 Gew.-% bis 30 Gew.-%, vorzugsweise von 1 Gew.-% bis 20 Gew.-% und noch bevorzugter von 5 Gew.-% bis 20 Gew.-%, bezogen auf das Gesamtgewicht der in der Harzzusammensetzung enthaltenen Komponente A.

5. Harzzusammensetzung nach einem der Ansprüche 1 bis 4, **dadurch gekennzeichnet, dass** die Komponente A eines oder mehrere aus der Gruppe umfasst bestehend aus N-Phenylmaleimid, 2,6-Xylylmaleimid, N,N'-m-Phenylenbismaleimid, N,N'-(4-Methyl-m-phenylen)-bismaleimid, 4,4'-Diphenylmethanbismaleimid, m-Xylylenbismaleimid, 1,3-Bis(citraconimidomethyl)benzol, 1,6-Bismaleimido-(trimethyl)hexan (Isomerengemisch aus 2,2,4- und 2,4,4-Trimethyl) und/oder deren Oligomere und/oder Prepolymere.

6. Harzzusammensetzung nach einem der Ansprüche 1 bis 5, **dadurch gekennzeichnet, dass** die Zusammensetzung Zähigkeitsmodifikatoren enthält, die aus der Gruppe ausgewählt sind bestehend aus thermoplastischen Harzen, insbesondere Polyethylenoxid und Polypropylenoxid, reaktiven Kautschuken, insbesondere Butadien-Acrylnitril-Copolymeren mit Maleinimid-Endgruppen und/oder Monomeren, die reaktive Maleinimid- oder Citraconimid-Gruppen mit flexiblen Linkern umfassen, insbesondere langen aliphatischen Ketten und/oder Ethylenglykol-Abstandshaltern, Monomeren wie Q-Bond (ein Bismaleimid mit 36 Kohlenstoffatomen und verzweigter cycloaliphatischer Struktur) und/oder MIA (ein oligomeres Polyether-Bismaleimid, Poly(oxybutylen)-di(2-maleimidoacetat), deren Oligomeren und/oder Präpolymeren.

7. Harzzusammensetzung nach einem der Ansprüche 1 bis 6, **dadurch gekennzeichnet, dass** die Komponente B ein multifunktionelles (Meth)acrylat und/oder eine Mischung aus mono- und multifunktionellen (Meth)acrylaten umfasst, insbesondere Methyl-, Ethyl-, 2-Hydroxyethyl-, Butyl-, Benzyl-, Tetrahydrofurfuryl- oder Isobornyl(meth)acrylat, 1,4-Butandioldi(meth)acrylat, 1,6-Hexandioldi(meth)acrylat, 1,10-Decandioldi(meth)acrylat oder 1,12-Dodecandioldi-(meth)acrylat, 2-(2-Biphenyloxy)-ethyl(meth)acrylat, Bisphenol-A-di(meth)acrylat, Ethoxy- oder propoxyliertes Bisphenol-A-di(meth)acrylat (z.B. 2-[4-(2-(Meth)acryloyloxyethoxyethoxy)phenyl]-2-[4-(2-(Meth)acryloyloxyethoxy)phenyl]-propan) oder 2,2-Bis[4-(2-(Meth)acryloxypropoxy)phenyl]propan, 1,6-Bis-[2-(Meth)-acryloyloxyethoxycarbonylamino]-2,2,4-trimethylhexan, Pentaerythrittetra(meth)acrylat, Tricyclodecandimethanoldi(meth)acrylat, Di-, Tri- oder Tetraethylenglykol-di(meth)acrylat und/oder Trimethylolpropantri(meth)acrylat.

8. Harzzusammensetzung nach einem der Ansprüche 1 bis 7, **dadurch gekennzeichnet, dass** die Harzzusammensetzung mindestens einen Photoinitiator umfasst, der zur radikalischen Polymerisation bei Lichtanregung, vorzugsweise bei Lichtanregung innerhalb des Wellenlängenspektrums von 150 nm bis 580 nm, mehr bevorzugt zwischen 300 nm und 500 nm, geeignet ist, vorzugsweise in Mengen von 0,01 Gew.-% bis 10 Gew.-%, vorzugsweise 0,1 Gew.-% bis 7 Gew.-%, mehr bevorzugt 0,2 Gew.-% bis 5 Gew.-%, bezogen auf das Gewicht der Komponenten A und B.

9. Harzzusammensetzung nach Anspruch 8, **dadurch gekennzeichnet, dass** der mindestens eine Photoinitiator, allein oder in Kombination miteinander, 2-Hydroxy-2-methylpropiophenon, 1-Hydroxycyclohexylphenylketon, Methylphenylglyoxylate, 2-Benzyl-2-(dimethylamino)-4'-morpholinobutyrophenon, [1-(4-Phenylsulfanylbenzoyl)heptylidenamino]benzoat, [1-[9-Ethyl-6-(2-methylbenzoyl)carbazol-3-yl]ethylidenamino]acetat, Bis-(cyclopentadienyl)-bis-[2,6-difluor-3-(1-pyrryl)phenyl]-titan, Initiatoren auf Acyl- oder Bisacylphosphinoxid-Basis, insbesondere 2,4,6-Trimethylbenzoyldiphenylphosphinoxid (TPO), Ethyl-(2,4,6-trimethylbenzoyl)phenylphosphinat (TPO-L), Phenylbis(2,4,6-trimethylbenzoyl)phosphinoxid (BAPO), Ethyl-(3-Benzoyl-2,4,6-trimethylbenzoyl)phenylphosphinat, Acyl-, Bisacyl- oder Tetraacylgermane, insbesondere Bis(4-methoxybenzoyl)diethylgerman (BMDG), Acyl-, Bisacyl- oder Tetraacylsilane, Acyl-, Bisacyl- oder Tetraacylstannane, Benzophenone, insbesondere Benzophenon, 4-Methylbenzophenon und/oder 4,4'-Bis(diethylamino)benzophenon, Benzoin, Diketone, insbesondere 9,10-Phenanthrenchinon, 1-Phenylpropan-1,2-dion, Diacetyl oder 4,4'-Dichlorbenzil und/oder deren Derivate, Thioxanthone, insbesondere 2,4-Diethyl-9H-thioxanthen-9-on, ist.

10. Harzzusammensetzung nach einem der Ansprüche 1 bis 9, **dadurch gekennzeichnet, dass** die Harzzusammensetzung einen und/oder mehrere Initiatoren für die radikalische Polymerisation umfasst, insbesondere thermische Initiatoren, vorzugsweise Azoverbindungen, besonders bevorzugt 2,2'-Azobis(isobutyronitril) und/oder Azobis-(4-cyanovaleriansäure)) und/oder Peroxide (z.B. Dibenzoylperoxid, Dilauroylperoxid, Dicumylperoxid, tert-Butylperbenzoat, Di-(tert-butyl)-peroxid) und/oder 1,1,2,2-Tetraphenyl-1,2-ethandiol.

11. Harzzusammensetzung nach einem der Ansprüche 1 bis 10, **dadurch gekennzeichnet, dass** die Harzzusammensetzung mindestens einen Polymerisationsinhibitor, vorzugsweise einen Inhibitor ausgewählt aus der Gruppe bestehend aus Hydrochinonen, Benzochinonen und/oder Phenothiazinen, umfasst.

12. Harzzusammensetzung nach einem der Ansprüche 9 bis 11, **dadurch gekennzeichnet, dass** Photoinitiatoren, thermische Initiatoren und/oder Polymerisationsinhibitoren zusätzlich mit einer polymerisierbaren funktionellen Gruppe funktionalisiert sind, die entweder mit Komponente A oder mit Komponente B copolymerisiert werden kann.

13. Harzzusammensetzung nach einem der Ansprüche 1 bis 12, **dadurch gekennzeichnet, dass** die Komponente A weiterhin ein Comonomer und/oder Cooligomer und/oder Coprepolymer umfasst, das sowohl mit der Komponente A als auch mit deren Derivaten copolymerisieren kann, insbesondere ein Comonomer und/oder Cooligomer und/oder Coprepolymer, ausgewählt aus der Gruppe Alkenylphenol, Alkenylphenylether, Alkenylphenolether, Polyamin, Aminophenol, Aminosäurehydrazin, Cyanatester, Diallylphthalat, Triallylisocyanurat, Triallylcyanurat, vinylische und/oder styrolische funktionelle Gruppen.

14. Harzzusammensetzung nach einem der Ansprüche 1 bis 13, **dadurch gekennzeichnet, dass** die Harzzusammensetzung mindestens einen Katalysator für die thermische Härtung der Komponente A umfasst, wobei der Katalysator vorzugsweise ausgewählt ist aus der Gruppe bestehend aus tertiären Aminen, insbesondere DABCO und Triethylamin, Phosphinen, Triphenylphosphonat, Imidazolen, insbesondere 2-Methyl-1-vinyl-imidazol, organischen Säuren und/oder Peroxiden.

15. Harzzusammensetzung nach einem der Ansprüche 1 bis 14, **dadurch gekennzeichnet, dass** die Harzzusammensetzung bei Raumtemperatur (20°C) eine Viskosität > 5 Pa*s, vorzugsweise > 50 Pa*s aufweist.

16. Verwendung einer Harzzusammensetzung nach einem der Ansprüche 1 bis 15, **dadurch gekennzeichnet, dass** die Zusammensetzung einem lichtinduzierten Strukturierungsschritt gefolgt von einem wärmeinduzierten Härtungsschritt unterzogen wird.

17. Verwendung nach Anspruch 16, **dadurch gekennzeichnet, dass** der Schritt der lichtinduzierten Strukturierung bei erhöhten Verarbeitungstemperaturen der Harzzusammensetzung durchgeführt wird, vorzugsweise bei einer Temperatur zwischen 40°C und 150°C, mehr bevorzugt zwischen 60°C und 120°C, noch mehr bevorzugt zwischen 70°C und 110°C.

18. Verwendung nach Anspruch 17, **dadurch gekennzeichnet, dass** eine Schicht der Harzzusammensetzung auf einem Träger gebildet wird, vorzugsweise mit Hilfe einer Rakel, wobei die Harzzusammensetzung vorzugsweise eine Viskosität bei der Verarbeitungstemperatur von 0,01 bis 40 Pa*s, vorzugsweise von 0,1 bis 25 Pa*s, aufweist

19. Verwendung nach Anspruch 16, 17 oder 18, **dadurch gekennzeichnet, dass** der lichtinduzierte Strukturierungsschritt zum Aufbau eines Formkörpers mittels 3D-Druck durchgeführt wird, wobei Schichten des Formkörpers nacheinander und übereinander gebildet werden, indem jeweils eine Materialschicht vorgegebener Dicke der Harzzusammensetzung zwischen einem transparenten oder zumindest teilweise transparenten Träger, wie einer Platte, einer Trägerfolie oder einem Wannenboden, und einer mechanisch verstellbaren Bauplattform gebildet wird, oder der Formkörper zumindest teilweise auf der Bauplattform gebildet wird, und wobei die so definierte Materialschicht positionsselektiv ausgehärtet wird, insbesondere durch Bestrahlung durch den transparenten oder zumindest teilweise transparenten Träger, um die gewünschte Form der Formkörperschicht bereitzustellen.

20. Gegenstand, der hergestellt wird, indem die Harzzusammensetzung nach einem der Ansprüche 1 bis 15 einem lichtinduzierten Strukturierungsschritt gefolgt von einem wärmeinduzierten Härtungsschritt unterzogen wird.

21. Gegenstand nach Anspruch 20, **dadurch gekennzeichnet, dass** der Gegenstand eine Wärmeformbeständigkeitstemperatur (HDT(B)) von 250°C bis 360°C, einen Speichermodul von > 1 GPa bis zu Temperaturen im Bereich von 250°C bis 360°C, eine Glasübergangstemperatur von 250°C bis 360°C und einen Biegemodul bei Raumtemperatur (20°C) von > 3 GPa aufweist.

## Revendications

1. Composition de résine pour l'impression tridimensionnelle, la composition de résine comprenant
a) un composant thermodurcissable A ayant une ou plusieurs espèces chimiques choisies dans le groupe constitué par les monomères et/ou oligomères et/ou prépolymères de dérivés de maléimide selon la formule (I) 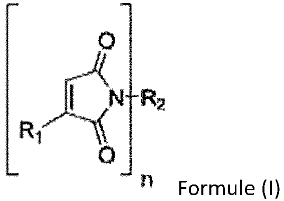 ainsi que leurs isomères, en particulier l'itaconimide, où
- n est un nombre entier compris entre 1 et 10
- R1 représente H, CH3 ou CH2,
- R2 représente indépendamment un résidu aromatique ou aliphatique en C5-C40, linéaire, ramifié ou cyclique, d'un ou plusieurs des groupes suivants : phényle, benzyle, phénéthyle, méthyle, éthyle, propyle, butyle, pentyle, hexyle, octyle, décanyle, dodécanyle, acide acétique, propanoique, butanoique, pentanoique, undécanoique, dodécanoique, benzoïque et des esters correspondants, esters d'alkyle ou aromatiques, cyclopropyle, cyclobutyle, du cyclopentyle, cyclohexyle, cycloheptyle, cyclooctyle, adamantyle, isobornyle, propényle, biphényle, naphtyle, anthracényle, pyrényle, bis(méthylène)oxy, bis(éthylène)oxy, bis(phényl)méthane, bis(phényl)éthane, bis(phényl)propane, bis(phényl)butane, éther de bis(phényle), thioéther de bis(phényle), bis(phényl)amino et bis(phényl)sulfone, qui sont éventuellement substitués par un ou plusieurs groupes alkyle en C1-C6, alcoxy en C1-C6, thioéther en C1-C6, halogène, -NO2, -SO3H, -CF3, -OH, -NH2, -SH, -CN, -isocyanato, -triméthoxysilyle, -triéthoxysilyle ou un groupe polymérisable des classes de substances des composés maléimide et citraconimide et/ou leurs isomères, en particulier l'itaconimide.
et
b) un composant B photodurcissable ayant une ou plusieurs espèces chimiques choisies dans le groupe constitué par les (méth)acrylates, (méth)acrylamides, esters vinyliques, éthers vinyliques, composés vinyliques, allyliques, alcynyliques ou styréniques ainsi que leurs dérivés substitués par au moins une molécule du groupe dans lequel est choisi le composant A, où la quantité de composant A est comprise entre 30 % en poids et 95 % en poids par rapport au poids total des composants A et B et la quantité de composant B photodurcissable est comprise entre 5 et 70 % en poids, sur la base du poids total des composants A et B, **caractérisée en ce que** le composant A comprend une espèce de composant A avec n étant un nombre entier de 2 à 10 ayant un résidu aromatique lié à l'atome N du cycle maléimide de formule I, de préférence par l'intermédiaire d'un groupe méthylène, en une quantité allant de 20 % en poids à 100 % en poids, de préférence de 30 % en poids à 100 % en poids et plus préférablement de 40 % en poids à 100 % en poids, sur la base du poids total du composant A compris dans la composition de résine.

2. Composition de résine selon la revendication 1, **caractérisée en ce que** la quantité de composant A est comprise entre 40 % en poids et 95 % en poids, de préférence entre 50 % en poids et 95 % en poids, plus préférablement entre 60 % en poids et 95 % en poids et encore plus préférablement entre 70 % en poids et 95 % en poids par rapport au poids total des composants A et B et la quantité de composant photodurcissable B est comprise entre 5 % en poids à 60 % en poids, de préférence de 5 % en poids à 50 % en poids, plus préférablement de 5 % en poids à 40 % en poids, encore plus préférablement de 5 % en poids à 30 % en poids par rapport au poids total des composants A et B.

3. Composition de résine selon la revendication 1 ou 2, **caractérisée en ce que** le composant A comprend en outre une espèce de composant A avec n étant un nombre entier de 2 à 10, dans laquelle R2 est un résidu aliphatique en une quantité allant de 0,5 % en poids à 50 % en poids, de préférence de 3 % en poids à 30 % en poids et plus préférablement de 5 % en poids à 15 % en poids, sur la base du poids total du composant A compris dans la composition de résine.

4. Composition de résine selon la revendication 1, 2 ou 3, **caractérisée en ce que** le composant A comprend une espèce de composant A avec n étant 1, où R2 représente indépendamment un résidu aromatique ou aliphatique en C5-C40 linéaire, ramifié ou cyclique d'un ou plusieurs du groupe constitué par le phényle, benzyle, phénéthyle, méthyle, éthyle, propyle, butyle, pentyle, hexyle, octyle, décanyle, do-décanyle, acide acétique, propanoïque, butanoïque, pentanoïque, undécanoïque, dodécanoïque, benzoïque et les esters correspondants, les esters d'alkyle ou aromatiques, le cyclopropyle, cyclobutyle, cyclopentyle, cyclohexyle, cycloheptyle, cyclooctyle, adamantyle, isobornyle, propényle, biphényle, naphtyle, anthracényle, pyrényle, (méthylène)oxy, (éthylène)oxy, qui sont éventuellement substitués par un ou plusieurs groupes (éthylène)oxy, qui sont éventuellement substitués par un ou plusieurs groupes alkyle en C1-C6, alcoxy en C1-C6, thioéther en C1-C6, halogène, -NO2, -SO3H, -CF3, -OH, -NH2, -SH, -CN, -isocyanato, -triméthoxysilyle ou -triéthoxysilyle, en une quantité allant de 0,5 % en poids à 30 % en poids, de préférence de 1 % en poids à 20 % en poids et plus préférablement de 5 % en poids à 20 % en poids, par rapport au poids total du composant A compris dans la composition de résine.

5. Composition de résine selon l'une quelconque des revendications 1 à 4, **caractérisée en ce que** le composant A comprend un ou plusieurs éléments du groupe constitué par le N-phénylmaléimide, 2,6-xylmaléimide, N,N'-m-phénylènebismaléimide, le N,N'-(4-méthyl-m-phénylène)-bismaléimide, 4,4'-diphénylméthanebismaléimide, m-xylylènebismaléimide, 1,3-bis(citraconimidométhyl)benzène, 1,6-bismaléimido-(triméthyl)hexane (mélange isomérique de 2,2,4- et 2,4,4- triméthyl) et/ou leurs oligomères et/ou prépolymères.

6. Composition de résine selon l'une quelconque des revendications 1 à 5, **caractérisée en ce que** la composition comprend des modificateurs de ténacité choisis dans le groupe constitué par les résines thermoplastiques, en particulier l'oxyde de polyéthylène et l'oxyde de polypropylène, les caoutchoucs réactifs, en particulier le copolymère butadiène-acrylonitrile à terminaison maléimido et/ou les monomères comprenant des groupes réactifs maléimide ou citraconimide à liaisons souples, en particulier de longues chaînes aliphatiques et/ou des espaceurs d'éthylène glycol, monomères tels que Q-Bond (une structure ramifiée cycloaliphatique à 36 atomes de carbone de bismaléimide) et/ou MIA (un polyéther bismaléimide oligomère, poly(oxybutylène)-di(2- maléimidoacétate), leurs oligomères et/ou prépolymères.

7. Composition de résine selon l'une quelconque des revendications 1 à 6, **caractérisée en ce que** le composant B comprend un (méth)acrylate multifonctionnel et/ou un mélange de (méth)acrylates mono- et multifonctionnels, en particulier (méth)acrylate de méthyle, éthyle, 2-hydroxyéthyle, butyle, benzyle, tétrahydrofurfuryle ou isobornyle, 1,4-butanedioldi(méth)acrylate, 1,6-hexanedioldi(méth)acrylate, 1,10-décanedioldi(méth)acrylate ou 1,12-dodécanedioldi-(méth)acrylate, 2-(2-biphényloxy)-éthyl(méth)acrylate, bisphénol-A-di(méth)acrylate, bisphénol-A-di(méth)acrylate éthoxy- ou propoxylé (par ex. g. 2-[4-(2-(méth)acryloyloxyéthoxy)phényl]-2-[4-(2-(méth)acryloyloxyéthoxy)phényl]-propane) ou 2,2-bis[4-(2-(méth)acryloxypropoxy)phényl]propane, 1,6-bis-[2-(méth)-acryloyloxyéthoxycarbonylamino]-2,2,4-triméthylhexane, pentaerythrittetra(méth)acrylate, di(méth)acrylate de tricyclodécanediméthanol, di(méth)acrylate de di-, tri- ou tétraéthylenglycol et/ou le triméthylolpropantri(méth)acrylate.

8. Composition de résine selon les revendications 1 à 7, **caractérisée en ce que** la composition de résine comprend au moins un photoinitiateur apte à la polymérisation radicalaire par excitation lumineuse, de préférence polymérisation radicalaire par excitation lumineuse, de préférence excitation lumineuse dans le spectre de longueur d'onde de 150 nm à 580 nm, plus préférablement entre 300 nm et 500 nm, de préférence en des quantités de 0,01 % en poids à 10 % en poids, de préférence de 0,1 % en poids à 7 % en poids, plus préférablement 0,2 % en poids à 5 % en poids, par rapport au poids des composants A et B.

9. Composition de résine selon la revendication 8, **caractérisée en ce que** le au moins un photoinitiateur est, seul ou en combinaison l'un avec l'autre, 2-hydroxy-2-méthylpropiophénone, 1-hydroxycyclohexyl phényl cétone, méthylphénylglyoxylates, 2-benzyl-2-(diméthylamino)-4'-morpholinobutyrophénone, [1-(4-phénylsulfanylbenzoyl)heptylidèneamino]benzoate, acétate de [1-[9-éthyl-6-(2-méthylbenzoyl)carbazol-3-yl]éthylidèneamino], bis (cyclopentadiényl) bis [2,6-difluoro-3-(1-pyrryl) phényl] titane, initiateurs à base d'oxyde d'acyle ou de bisacyl-phosphine, notamment le 2,4,6-triméthylbenzoyldiphénylphosphine (TPO), le phosphinate d'éthyl-(2,4,6-triméthylbenzoyl)phényle (TPO-L), l'oxyde de phénylbis(2,4,6-triméthylbenzoyl)phosphine (BAPO), le (3-benzoyl-2,4,6-triméthylbenzoyl)phénylphosphinate d'éthyl, les acyl-, bisacyl- ou tétraacylgermanes, en particulier le bis(4-méthoxybenzoyl)diéthylgermane (BMDG), les acyl-, bisacyl- ou tétraacylsilanes, les acyl-, bisacyl- ou tétraacylstannanes., les benzophénones, notamment la benzophénone, la 4-méthyl benzophénone et/ou la 4,4'-bis(diéthylamino)benzophénone, la benzoïne, les dicétones, notamment la 9,10-phénanthrènequinone, la 1-phényl-propane-1,2-dione, le diacétyle ou le 4,4'-dichlorobenzil et/ou leurs dérivés, les thioxanthones, notamment la 2,4-diéthyl-9H-thioxanthène-9-one.

10. Composition de résine selon l'une quelconque des revendications 1 à 9, **caractérisée en ce que** la composition de résine comprend un et/ou plusieurs initiateurs de polymérisation radicalaire, en particulier des initiateurs thermiques, de préférence des composés azoïques, plus préférablement le 2,2'azobis(isobutyronitrile) et/ou l'azobis-(acide 4-cyanovalérique)) et/ou des peroxydes (par ex. peroxyde de dibenzoyle, peroxyde de dilauroyle, peroxyde de dicumyle, perbenzoate de tert-butyle, peroxyde de di-(tert-butyle)) et/ou le 1,1,2,2-tétraphényl-1,2-éthanediol.

11. Composition de résine selon l'une quelconque des revendications 1 à 10, **caractérisée en ce que** la composition de résine comprend au moins un inhibiteur de polymérisation, de préférence un inhibiteur choisi dans le groupe constitué par hydroquinones, benzoquinones et/ou phénothiazines.

12. Composition de résine selon l'une quelconque des revendications 9 à 11, **caractérisée en ce que** des photoinitiateurs, des initiateurs thermiques initiateurs thermiques et/ou des inhibiteurs de polymérisation sont additionnellement fonctionnalisés par un groupe fonctionnel polymérisable, qui peut subir une copolymérisation soit avec le composant A, soit avec le composant B.

13. Composition de résine selon l'une quelconque des revendications 1 à 12, **caractérisée en ce que** le composant A comprend en outre un comonomère et/ou cooligomère et/ou coprépolymère, qui est capable de copolymériser avec le composant A ainsi qu'avec ses dérivés, en particulier un comonomère et/ou cooligomère et/ou coprépolymère choisi dans le groupe des alcénylphénol, l'éther alcénylphénylique, l'éther alcénylphénolique, la polyamine, l'aminophénol, l'hydrazine d'acide aminé, l'ester cyanate, le phtalate de diallyle, l'isocyanurate de triallyle, le cyanurate de triallyle, les groupes fonctionnels vinyliques et/ou styréniques.

14. Composition de résine selon l'une quelconque des revendications 1 à 13, **caractérisée en ce que** la composition de résine comprend au moins un catalyseur pour le durcissement thermique du composant A, le catalyseur étant de préférence choisi dans le groupe constitué par les amines tertiaires, notamment le DABCO et la triéthylamine, les phosphines, le phosphonate de triphényle, les imidazoles, en particulier le 2-méthyl-1-vinyl imidazole, les acides organiques et/ou les peroxydes.

15. Composition de résine selon l'une quelconque des revendications 1 à 14, **caractérisée en ce que** la composition de résine à température ambiante (20°C) présente une viscosité > 5 Pa*s, de préférence > 50 Pa*s.

16. Utilisation d'une composition de résine selon l'une quelconque des revendications 1 à 15, **caractérisée en ce que** la composition est soumise à une étape de structuration induite par la lumière suivie d'une étape de durcissement induite par la chaleur.

17. Utilisation selon la revendication 16, **caractérisée en ce que** l'étape de structuration induite par la lumière est réalisée à des températures de traitement élevées de la composition de résine, de préférence à une température comprise entre 40°C et 150°C, plus préférentiellement entre 60°C et 120°C, encore plus préférentiellement entre 70°C et 110°C.

18. Utilisation selon la revendication 17, **caractérisée en ce qu'**une couche de la composition de résine est formée sur un support, de préférence au moyen d'une lame de rechapage, la composition de résine ayant de préférence une viscosité à ladite température de traitement de 0,01 à 40 Pa*s, de préférence de 0,1 à 25 Pa*s

19. Utilisation selon la revendication 16, 17 ou 18, **caractérisée en ce que** l'étape de structuration induite par la lumière est réalisée pour construire un corps façonné par impression 3D, où des couches dudit corps façonné sont formées l'une après l'autre et l'une sur l'autre en formant chacune une couche de matériau d'épaisseur prédéterminée de la composition de résine entre un support transparent ou au moins partiellement transparent, tel qu'une plaque, un film de support ou un fond de cuve, et une plate-forme de construction réglable mécaniquement, ou le corps façonné formé au moins partiellement sur la plate-forme de construction, et dans lequel la couche de matériau ainsi définie est durcie d'une manière sélective en position, en particulier par irradiation à travers le support transparent ou au moins partiellement transparent, pour fournir la forme souhaitée de la couche de corps façonné.

20. Article produit en soumettant la composition de résine selon l'une quelconque des revendications 1 à 15 à une étape de structuration induite par la lumière suivie d'une étape de durcissement induite par la chaleur.

21. Article selon la revendication 20, **caractérisé en ce que** l'article a une température de déviation thermique (HDT(B)) comprise entre 250°C et 360°C, un module de stockage > 1 GPa jusqu'à des températures comprises entre 250°C et 360°C, une température de transition vitreuse allant de 250°C à 360°C et un module de flexion à température ambiante (20°C) de > 3 GPa.
